(19) Europäisches Patentamt
European Patent Office
Office européen des brevets

(11) EP 4 664 571 A1

(12) # EUROPEAN PATENT APPLICATION
published in accordance with Art. 153(4) EPC

(43) Date of publication:
**17.12.2025 Bulletin 2025/51**

(21) Application number: **23933352.9**

(22) Date of filing: **17.04.2023**

(51) International Patent Classification (IPC):
***H01M 10/04** (2006.01)* ***H01M 4/131** (2010.01)*

(52) Cooperative Patent Classification (CPC):
Y02E 60/10

(86) International application number:
**PCT/CN2023/088801**

(87) International publication number:
**WO 2024/216472 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **JIN, Haizu**
  **Ningde, Fujian 352100 (CN)**
- **XU, Hu**
  **Ningde, Fujian 352100 (CN)**
- **LI, Baiqing**
  **Ningde, Fujian 352100 (CN)**
- **ZHAO, Fenggang**
  **Ningde, Fujian 352100 (CN)**

(74) Representative: **Gong, Jinping**
**CocreateIP**
**Neumarkter Straße 21**
**81673 München (DE)**

(54) **BATTERY CELL, BATTERY, AND ELECTRICAL APPARATUS**

(57) The present application provides a battery cell, a battery, and an electrical apparatus; the battery cell comprises an electrode assembly and an electrolyte; the electrode assembly comprises a first electrode plate, a second electrode plate, and a separator; the polarities of the first electrode plate and the second electrode plate are opposite; the separator is arranged between the first electrode plate and the second electrode plate; at least one of the first electrode plate, the second electrode plate, and the separator comprises a lyophilic polymer; and the battery cell satisfies the following formula (I):

$$0.01\% \leq \frac{y}{M-M'} \leq 15\% \text{ (I).}$$

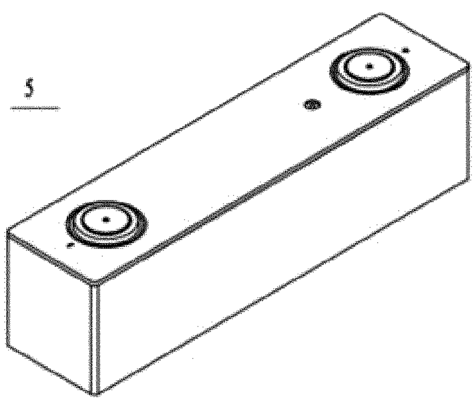


FIG. 1

EP 4 664 571 A1

## Description

### TECHNICAL FIELD

The present application relates to the field of batteries, and in particular to a battery cell, a battery, and an electrical apparatus.

### BACKGROUND

Because of the characteristics of a high capacity, a long service life and the like, battery cells are widely used in electronic devices, such as mobile phones, laptops, electromobiles, electric cars, electric airplanes, electric ships, electric toy cars, electric toy ships, electric toy airplanes, and electric tools.

However, as the application range of batteries becomes more and more extensive, the requirements on the performance of the battery cells are becoming increasingly stringent. In order to improve the performance of the battery cells, the battery cells are usually optimized and improved; however, the use reliability and cycle performance of the battery cells are still poor.

### SUMMARY OF THE INVENTION

The present application is conducted in view of the above problems, and aims to provide a battery cell, a battery, and an electrical apparatus.

A first aspect of the present application provides a battery cell, the battery cell includes an electrode assembly and an electrolyte, the electrode assembly includes a first electrode plate, a second electrode plate, and a separator, polarities of the first electrode plate and the second electrode plate are opposite, the separator is arranged between the first electrode plate and the second electrode plate, and at least one of the first electrode plate, the second electrode plate, and the separator includes a lyophilic polymer; and the battery cell satisfies the following formula:

$$0 \leq \frac{y}{M-M'} \leq 15\%;$$

y denotes mass of a free electrolyte solution in the battery cell, with a unit of g;
M denotes mass of the battery cell before the battery cell is dried, with a unit of g; and
M' denotes mass of the battery cell after the battery cell is dried, with a unit of g.

Therefore, when the above formula range is satisfied in embodiments of the present application, the lyophilic polymer and the electrolyte solution have good affinity, the electrolyte solution can quickly diffuse to positions between molecular chains of the lyophilic polymer and be wrapped by the molecular chains, and after swelling, adsorption, polymerization and coagulation, the sustained-release electrolyte in an elastic porous form is obtained. The sustained-release electrolyte can absorb the free electrolyte solution in the battery cell and reduce the presence of the free electrolyte solution. Since the free electrolyte solution is locked, the risk of the free electrolyte solution being squeezed out is reduced, thereby reducing the risk of short-circuiting of a positive electrode plate and a negative electrode plate caused by dendrite generation, and improving the use reliability and cycle performance of the battery cell. In addition, the absorbed free electrolyte solution forms a new condensed electrolyte with the sustained-release electrolyte in the elastic porous form, which can ensure that the electrolyte has a higher conductivity, thereby improving the electrical performance of the battery cell.

In some embodiments, the battery cell satisfies the following formula:

$$0.01\% \leq \frac{y}{M-M'} \leq 10\%;$$

and optionally,

$$0.05\% \leq \frac{y}{M-M'} \leq 7\%.$$

Therefore, in the case of the above formula in the embodiment of the present application, it is possible to further improve both the use reliability and the cycle performance of the battery cell.

In some embodiments, the battery cell further satisfies the following formula:

$$0 \leq \frac{y}{m_1 - m_2} \leq 10\%;$$

and/or

$$0 \leq \frac{y}{m_2} \leq 5\%;$$

$m_1$ denotes mass of the electrode assembly before the electrode assembly is dried, with a unit of g; and
$m_2$ denotes mass of the electrode assembly after the electrode assembly is dried, with a unit of g.

Therefore, in the case of the above formula in the embodiment of the present application, it is possible to further improve both the use reliability and the cycle performance of the battery cell.
In some embodiments, an amount of the free electrolyte solution per unit capacity of the battery cell is b, with a unit of mg/Ah, wherein $0 \leq b \leq 1400$; optionally, $0.1 \leq b \leq 1000$; and further optionally, $0.3 \leq b \leq 800$.
Therefore, in the case of the above formula in the embodiment of the present application, it is possible to further improve both the use reliability and the cycle performance of the battery cell.
In some embodiments, the first electrode plate includes a current collector and an active material layer disposed on at least one surface of the current collector, the active material layer includes a lyophilic polymer and active material particles; the lyophilic polymer is distributed on surfaces of the active material particles; and/or a plurality of active material particles are provided, a pore exists between every two adjacent active material particles, and the lyophilic polymer is distributed in the pores between the active material particles.
Therefore, in the embodiment of the present application, the lyophilic polymer is disposed on the first electrode plate, which may improve the liquid retention capability of the first electrode plate, and it is possible to further improve both the use reliability and the cycle performance of the battery cell.
In some embodiments, the separator includes a substrate and a coating disposed on at least one surface of the substrate; the lyophilic polymer is distributed in pores of the substrate; and/or the lyophilic polymer is distributed in the coating; and/or the lyophilic polymer is disposed on a surface of the coating facing away from the substrate.
Therefore, in the embodiment of the present application, the lyophilic polymer is disposed on the separator, which may improve the liquid retention capability of the separator, and it is possible to further improve both the use reliability and the cycle performance of the battery cell.
In some embodiments, the battery cell further includes a liquid electrolyte, and the liquid electrolyte is located within the electrode assembly.
The liquid electrolyte is fluid, making it easier to flow around the active material particles, thereby increasing the transmission rate of active ions. In the related art, the liquid electrolyte usually has the following forms in the battery cell, one is diffusing into the pore structures of the electrode assembly, such as being located in the pores of the electrode plates and/or the separator, and the other is being free in the battery cell. The liquid electrolyte in the embodiment of the present application has the following forms, one is diffusing into the pore structures of the electrode assembly, such as being located in the pores of the electrode plates and/or the separation, and the other is diffusing into a swollen polymer, so that the liquid electrolyte in the embodiment of the present application is basically entirely located inside the electrode assembly, and there is basically no free electrolyte solution in the battery cell, which can significantly improve the use reliability and cycle performance of the battery cell.
In some embodiments, the lyophilic polymer includes a fluorinated polymer; crystallinity of the fluorinated polymer measured by differential scanning calorimetry is $Xc_1$, wherein $0 < Xc_1 \leq 30\%$; and a melting temperature of the fluorinated polymer is $T_{m1}$, with a unit of °C, wherein $0 < T_{m1} \leq 140$.
In some embodiments, a glass transition temperature of the fluorinated polymer is $T_{g1}$, with a unit of °C, wherein $-150 \leq T_{g1} \leq 60$.
In some embodiments, the fluorinated polymer includes at least one of a structural unit represented by Formula (AI) to a structural unit represented by Formula (AIII),

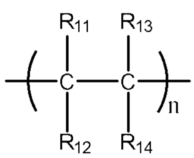 Formula (AI), 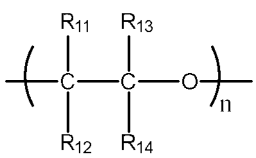 Formula (AII),

in Formula (AI) and Formula (AII), $R_{11}$, $R_{12}$, $R_{13}$ and $R_{14}$ each independently include a hydrogen atom, a fluorine atom, a chlorine atom, a substituted or unsubstituted C1-C3 alkyl group or a substituted or unsubstituted C1-C3 alkoxy

group, and at least one of $R_{11}$, $R_{12}$, $R_{13}$ and $R_{14}$ includes a fluorine atom; and when substituted, a substituent may include one or more of a nitrile group (-CN), a nitro group, a sulfonic group, a sulfonyl group, amide, a carboxyl group, an ester group, and a halogen atom;

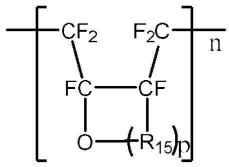 Formula (AIII);

in Formula (AIII), $R_{15}$ includes a single bond, and a substituted or unsubstituted C1-C3 alkyl group; when substituted, a substituent may include one or more of a nitrile group (-CN), a nitro group, a sulfonic group, a sulfonyl group, amide, a carboxyl group, an ester group, and a halogen atom; p is a positive integer selected from 1 to 3; and n is a positive integer selected from 1000 to 30000.

In some embodiments, the lyophilic polymer further includes an ether polymer, wherein the ether polymer is made into a sheet-like structural body; the sheet-like structural body is subjected to a dynamic frequency scanning test at $(T_{m2}+20)$°C to obtain an elastic modulus G'-loss modulus G" curve, and a slope of the elastic modulus G'-loss modulus G" curve is $K_1$, wherein $1<K_1<\infty$, and $T_{m2}$°C represents a melting temperature of the ether polymer; optionally, $1<K_1\leq 100$; and further optionally, $1<K_1\leq 10$.

In some embodiments, the ether polymer includes a structural unit represented by Formula (BI) and/or a structural unit represented by Formula (BII),

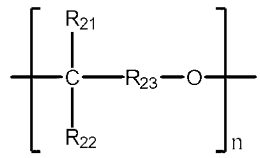 Formula (BI);

in Formula (BI), $R_{21}$ and $R_{22}$ each independently comprise a hydrogen atom, a substituted or unsubstituted C1-C3 alkyl group, or a substituted or unsubstituted C1-C3 alkoxy group; and $R_{23}$ comprises a substituted or unsubstituted C1-C5 alkylene group;

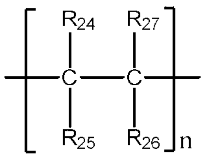 Formula (BII);

in Formula (BII), $R_{24}$ to $R_{27}$ each independently comprise a hydrogen atom, a substituted or unsubstituted C1-C3 alkyl group, a substituted or unsubstituted C1-C3 alkoxy group or an ether group, and at least one of $R_{24}$ to $R_{27}$ comprises a substituted or unsubstituted C1-C3 alkoxy group or an ether group.

In some embodiments, a substituent may include one or more of a nitrile group (-CN), a nitro group, a sulfonic group, a sulfonyl group, amide, a carboxyl group, an ester group, and a halogen atom.

In some embodiments, the lyophilic polymer includes an ester polymer, wherein the ester polymer is made into a sheet-like structural body; the sheet-like structural body is subjected to a dynamic frequency scanning test at $(T_{m3}+20)$°C to obtain an elastic modulus G'-loss modulus G" curve, and a slope of the elastic modulus G'-loss modulus G" curve is $K_2$, wherein $1<K_2<\infty$, and $T_{m3}$°C represents a melting temperature of the ester polymer; optionally, $1<K_2\leq 100$; and further optionally, $1<K_2\leq 10$.

In some embodiments, the ester polymer includes a structural unit represented by Formula (CI) and/or a structural unit represented by Formula (CII),

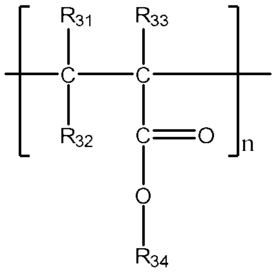

Formula (CI);

in Formula (CI), $R_{31}$, $R_{32}$ and $R_{33}$ each independently comprise a hydrogen atom, or a substituted or unsubstituted C1-C8 alkyl group; and $R_{34}$ comprises a substituted or unsubstituted C1-C8 alkyl group, or a substituted or unsubstituted C1-C8 hydroxyalkyl group;

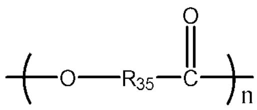

Formula (CII);

in Formula (CII), $R_{35}$ comprises a substituted or unsubstituted C2-C6 methylene group; and optionally, $R_{35}$ each independently comprises a substituted or unsubstituted C2-C4 methylene group.

In some embodiments, a substituent may include one or more of a nitrile group (-CN), a nitro group, a sulfonic group, a sulfonyl group, amide, a carboxyl group, an ester group, and a halogen atom.

In some embodiments, the lyophilic polymer includes an aldehyde ketone polymer, wherein the aldehyde ketone polymer is made into a sheet-like structural body; the sheet-like structural body is subjected to a dynamic frequency scanning test at $(T_{m4}+20)$°C to obtain an elastic modulus G'-loss modulus G" curve, and a slope of the elastic modulus G'-loss modulus G" curve is $K_3$, wherein $0.8 \leq K_3 < \infty$, and $T_{m4}$°C represents a melting temperature of the aldehyde ketone polymer; optionally, $0.8 \leq K_3 \leq 100$; and further optionally, $0.8 \leq K_3 \leq 10$.

In some embodiments, the aldehyde ketone polymer includes a structural unit represented by Formula (DI) and/or a structural unit represented by Formula (DII),

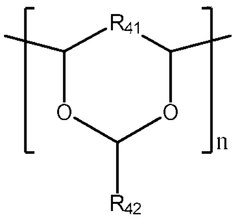

Formula (DI);

in Formula (DI), $R_{41}$ comprises a single bond, and a substituted or unsubstituted C1-C6 methylene group; and $R_{42}$ comprises a hydrogen atom, and a substituted or unsubstituted C1-C6 alkyl group;

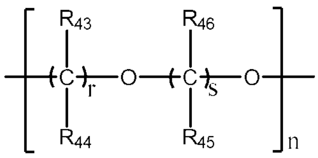

Formula (DII);

in Formula (DII), $R_{43}$ to $R_{46}$ each independently comprise a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; and r and s are each independently selected from integers in a range of 0 to 5, and at least one of r and s is selected from positive integers.

In some embodiments, a substituent may include one or more of a nitrile group (-CN), a nitro group, a sulfonic group, a sulfonyl group, amide, a carboxyl group, an ester group, and a halogen atom.

In some embodiments, a molecular weight of the lyophilic polymer is $1.2\times10^5$ g/mol to $1\times10^6$ g/mol.
A second aspect of the present application further provides a battery, including the battery cell according to any embodiment of the first aspect of the present application.
A third aspect of the present application further provides an electrical apparatus, including the battery according to the embodiment of the second aspect of the present application.

## BRIEF DESCRIPTION OF THE DRAWINGS

In order to explain technical solutions of examples of the present application more clearly, accompanying drawings that need to be used in the examples of the present application will be briefly introduced below. Apparently, the accompanying drawings described below are only some examples of the present application, and for those of ordinary skill in the art, on the premise of no creative labor, other drawings can also be obtained according to these drawings.

FIG. 1 is a schematic view of an embodiment of a battery cell of the present application;
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4;
FIG. 6 is a schematic view of an embodiment of an electrical apparatus including the battery cell of the present application as a power source;

The accompanying drawings may not be drawn according to the actual scale.

Description of reference numerals:

1, Battery pack; 2, Upper box body; 3, Lower box body; 4, Battery module;
5, Battery cell; 51, Housing; 52, Electrode assembly;
53, Cover plate;
6, Electrical apparatus.

## DESCRIPTION OF EMBODIMENTS

Hereinafter, embodiments specifically disclosing a battery cell, a battery, and an electrical apparatus of the present application are described in detail. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.
"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, wherein both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.
Unless otherwise specified, all embodiments and optional embodiments of the present application may be combined with each other to form new technical solutions. Unless otherwise specified, all technical features and optional technical features of the present application may be combined with each other to form new technical solutions.
If not specifically stated, all steps of the present application may be performed sequentially or randomly, preferably sequentially. For example, a method includes steps (a) and (b), meaning that the method may include steps

(a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the present application, the terms "a plurality of" and "multiple" refer to two or more.

Unless otherwise stated, the terms used in the present application have the well-known meanings commonly understood by those skilled in the art.

Unless otherwise specified, the numerical values of the parameters mentioned in the present application can be measured using various testing methods commonly used in the art, for example, they can be measured according to testing methods given in the examples of the present application.

The term "alkyl group" encompasses both linear and branched alkyl groups. For example, the alkyl group may be a C1-C5 alkyl group, a C1-C4 alkyl group, a C1-C3 alkyl group, and a C1-C2 alkyl group. In some embodiments, the alkyl group includes methyl, ethyl, propyl, isopropyl, butyl, isobutyl, and the like. Additionally, the alkyl group may be optionally substituted. When substituted, a substituent includes a fluorine atom.

The term "alkoxy group" refers to a group in which an alkyl group and an oxygen atom are connected via a single bond. For example, the alkoxy group may be a $C_1$ to $C_5$ alkoxy group, a $C_1$ to $C_3$ alkoxy group, and a $C_1$ to $C_2$ alkoxy group. In some embodiments, the alkoxy group may include methoxy, ethoxy, and propoxy. Additionally, the alkoxy group may be optionally substituted.

The term "halogen atom" refers to a fluorine atom, a chlorine atom, a bromine atom, and the like.

The term "hydrogen" refers to 1H (protium, H), 2H (deuterium, D) or 3H (tritium, T). In various examples, "hydrogen" may be 1H (protium, H).

The battery cell includes an electrode assembly and an electrolyte solution. The electrode assembly includes a positive electrode plate, a negative electrode plate, and a separator. The separator is disposed between the positive electrode plate and the negative electrode plate, and its main function is to prevent short-circuiting of the positive electrode plate and the negative electrode plate, while allowing active ions to pass through freely to form a loop.

The electrolyte solution is infiltrated into the electrode assembly, allowing the active ions to smoothly migrate from the positive electrode plate of the electrode assembly through the separator to the negative electrode plate. However, during the use of the battery cell, the volume of the electrode assembly may change (for example, expand) due to embedding or extraction of the active ions, causing the electrolyte solution infiltrated in the electrode assembly to be continuously squeezed out. The squeezed-out electrolyte solution may not be completely absorbed back into the electrode assembly, causing the electrode assembly to lack liquid and locally precipitate metal, increasing the risk of dendrite generation. As dendrites grow, they may pierce the separator, causing short-circuiting of the positive electrode plate and the negative electrode plate, thereby deteriorating the use reliability and cycle performance of the battery cell.

In view of the above problems, the present application proposes a battery cell, a lyophilic polymer is added into the electrode assembly, and after the lyophilic polymer is in contact with and mixed with a free electrolyte solution, the electrolyte solution is wrapped between molecular chains of the polymer to form a condensed electrolyte, thereby ensuring the electrical performance of the battery cell and further improving the reliability of the battery cell. The technical solution of the present application will be described in detail hereinafter.

## Battery cell

In a first aspect, the present application proposes a battery cell, including an electrode assembly and an electrolyte. The electrode assembly includes a first electrode plate, a second electrode plate, and a separator, polarities of the first electrode plate and the second electrode plate are opposite, and the separator is arranged between the first electrode plate and the second electrode plate; and at least one of the first electrode plate, the second electrode plate, and the separator includes a lyophilic polymer.

the battery cell satisfies the following formula:

$$0\% \leq \frac{y}{M-M'} \leq 15\%;$$

y denotes mass of a free electrolyte solution in the battery cell, with a unit of g;
M denotes mass of the battery cell before the battery cell is dried, with a unit of g; and
M' denotes mass of the battery cell after the battery cell is dried, with a unit of g.

In the embodiment of the present application, M-M' may be understood as the total amount of an electrolyte solution in the battery cell. After the electrolyte solution is injected into the battery cell, the electrolyte solution mainly has the following forms, one is being adsorbed in the electrode plates and/or the separator, the second is forming a condensed electrolyte with the lyophilic polymer, and the third is being in a liquid form and free in the battery cell. y denotes the mass of the electrolyte solution in the third state, namely the mass of the free electrolyte solution. The mass of the free electrolyte solution may be measured by the following method: a fresh battery cell is fully discharged to a 0% state of charge (SOC), the battery cell is weighed, and the weighed mass is M; a hole with a diameter of φ5-8 mm is formed in a local position of the battery cell, the battery cell is placed over a container, and the battery cell is located directly above the container with the hole facing downwards, so that the free electrolyte solution inside the battery cell can drip into the container below; and the battery cell is left to stand in this way for 3 h to 5 h so that the free electrolyte solution inside can all drip into the container, and then the electrolyte solution in the container is weighed to obtain y. Then, the battery cell is dried at 60°C to 95°C for 24 h to 48 h, the battery cell is immersed in a dimethyl carbonate (DMC) solvent to be fully immersed for 12 h, then the battery cell is dried at 60°C to 95°C for 24 h to 48 h, and the dried battery cell is weighed, with the weighed mass recorded as M'. For example, the battery cell is dried at 60°C for 5 h, and the dried battery cell is weighed. In the embodiment of the present application, the fresh battery cell may be a battery cell that has just left the factory (not subjected to charge-discharge cycles after formation), or a battery cell that is assembled on an electrical apparatus and has been cycled less than 10 times. $\frac{y}{M-M'}$ represents a ratio of the amount of the free electrolyte solution to the amount of the electrolyte solution in the battery cell, which can characterize the adsorption capacity of the electrode assembly to the electrolyte solution.

When the above formula range is satisfied in the embodiments of the present application, the lyophilic polymer and the electrolyte solution have good affinity, the electrolyte solution can quickly diffuse to positions between molecular chains of the lyophilic polymer and be wrapped by the molecular chains, and after swelling and adsorption, the sustained-release electrolyte in an elastic porous form is obtained. The sustained-release electrolyte can absorb the free electrolyte solution in the battery cell and reduce the presence of the free electrolyte solution. Since the free electrolyte solution is locked, the risk of the free electrolyte solution being squeezed out is reduced, thereby reducing the risk of short-circuiting of a positive electrode plate and a negative electrode plate caused by dendrite generation, and improving the use reliability and cycle performance of the battery cell. In addition, the absorbed free electrolyte solution forms a new condensed electrolyte with the sustained-release electrolyte in the elastic porous form, which can ensure that the electrolyte has a higher conductivity, thereby improving the electrical performance of the battery cell.

Therefore, when the embodiment of the present application satisfies $0 \leq \frac{y}{M-M'} \leq 15\%$, further satisfying $0.01\% \leq \frac{y}{M-M'} \leq 10\%$, especially satisfying $0.05\% \leq \frac{y}{M-M'} \leq 7\%$, it is possible to further improve both the use reliability and the cycle performance of the battery cell.

Exemplarily, $\frac{y}{M-M'}$ may be 0%, 0.001%, 0.002%, 0.003%, 0.004%, 0.005%, 0.006%, 0.007%, 0.008%, 0.009%, 0.01%, 0.012%, 0.014%, 0.016%, 0.018%, 0.02%, 0.022%, 0.024%, 0.026%, 0.028%, 0.03%, 0.032%, 0.034%, 0.036%, 0.038%, 0.04%, 0.042%, 0.044%, 0.046%, 0.048%, 0.05%, 0.052%, 0.054%, 0.056%, 0.058%, 0.06%, 0.062%, 0.064%, 0.066%, 0.068%, 0.07%, 0.072%, 0.074%, 0.076%, 0.078%, 0.08%, 0.082%, 0.084%, 0.086%, 0.088%, 0.09%, 0.092%, 0.094%, 0.096%, 0.098%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 4.10%, 4.20%, 4.30%, 4.40%, 4.50%, 4.60%, 4.70%, 4.80%, 4.90%, 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 7.10%, 7.20%, 7.30%, 7.40%, 7.50%, 7.60%, 7.70%, 7.80%, 7.90%, 8.00%, 8.10%, 8.20%, 8.30%, 8.40%, 8.50%, 8.60%, 8.70%, 8.80%, 8.90%, 9.00%, 9.10%, 9.20%, 9.30%, 9.40%, 9.50%, 9.60%, 9.70%, 9.80%, 9.90%, 10%, 10.10%, 10.20%, 10.30%, 10.40%, 10.50%, 10.60%, 10.70%, 10.80%, 10.90%, 11.00%, 11.10%, 11.20%, 11.30%, 11.40%, 11.50%, 11.60%, 11.70%, 11.80%, 11.90%, 12.00%, 12.10%, 12.20%, 12.30%, 12.40%, 12.50%, 12.60%, 12.70%, 12.80%, 12.90%, 13.00%, 13.10%, 13.20%, 13.30%, 13.40%, 13.50%, 13.60%, 13.70%, 13.80%, 13.90%, 14.00%, 14.10%, 14.20%, 14.30%, 14.40%, 14.50%, 14.60%, 14.70%, 14.80%, 14.90%, 15.00% or a range consisting of any two of the above values.

In the case that the embodiment of the present application satisfies the following conditions, it is possible to further improve both the use reliability and the cycle performance of the battery cell.

In some embodiments, the battery cell further satisfies the following formula:

$$0 \leq \frac{y}{m_1-m_2} \leq 10\%;$$

and optionally,

$$0.01\% \leq \frac{y}{m_1-m_2} \leq 5\%.$$

$m_1$ denotes the mass of the electrode assembly before the electrode assembly is dried, with a unit of g. The mass before drying represents the mass of the electrode assembly obtained by disassembling the battery cell, taking out the electrode assembly, and leaving the electrode assembly to stand for 3 h to 5 h to allow the free electrolyte solution in the electrode assembly to flow out.

$m_2$ denotes the mass of the electrode assembly after the electrode assembly is dried, with a unit of g. The mass after drying represents the mass of the electrode assembly obtained after the electrolyte solution adsorbed by the electrode assembly is dried to be removed, for example, the electrode assembly is placed in an oven and dried at 60°C to 95°C for 24 h to 48 h, the electrode assembly is immersed in a dimethyl carbonate (DMC) solvent to be fully immersed for 12 h, then the electrode assembly is placed in an oven and dried at 60°C to 95°C for 24 h to 48 h, the dried electrode assembly is weighed, and the obtained electrode assembly is the dried electrode assembly.

$m_2$-$m_1$ denotes the mass of the electrolyte solution adsorbed in the electrode assembly; and $\frac{y}{m_1-m_2}$ denotes a ratio of the mass of the free electrolyte solution to the mass of the electrolyte solution adsorbed in the electrode assembly, and may characterize the ability of the electrode assembly to adsorb the electrolyte solution.

When the embodiment of the present application satisfies the above formula range $0 \leq \frac{y}{m_1-m_2} \leq 10\%$ , it is possible to further improve the reliability of the battery cell. Exemplarily, $\frac{y}{m_1-m_2}$ may be 0%, 0.001%, 0.002%, 0.003%, 0.004%, 0.005%, 0.006%, 0.007%, 0.008%, 0.009%, 0.01%, 0.012%, 0.014%, 0.016%, 0.018%, 0.02%, 0.022%, 0.024%, 0.026%, 0.028%, 0.03%, 0.032%, 0.034%, 0.036%, 0.038%, 0.04%, 0.042%, 0.044%, 0.046%, 0.048%, 0.05%, 0.052%, 0.054%, 0.056%, 0.058%, 0.06%, 0.062%, 0.064%, 0.066%, 0.068%, 0.07%, 0.072%, 0.074%, 0.076%, 0.078%, 0.08%, 0.082%, 0.084%, 0.086%, 0.088%, 0.09%, 0.092%, 0.094%, 0.096%, 0.098%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 4.10%, 4.20%, 4.30%, 4.40%, 4.50%, 4.60%, 4.70%, 4.80%, 4.90%, 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 7.10%, 7.20%, 7.30%, 7.40%, 7.50%, 7.60%, 7.70%, 7.80%, 7.90%, 8.00%, 8.10%, 8.20%, 8.30%, 8.40%, 8.50%, 8.60%, 8.70%, 8.80%, 8.90%, 9.00%, 9.10%, 9.20%, 9.30%, 9.40%, 9.50%, 9.60%, 9.70%, 9.80%, 9.90%, 10% or a range consisting of any two of the above values.

In some embodiments, the battery cell further satisfies the following formula: $0 \leq \frac{y}{m_2} \leq 5\%$ , optionally, $0.01\% \leq \frac{y}{m_2} \leq 5\%$ . $\frac{y}{m_2}$ represents a ratio of the mass of the free electrolyte solution to the mass of the dried electrode assembly, namely the content of the free electrolyte solution corresponding to the unit mass of the dried electrode assembly, and may characterize the content of the electrolyte solution that can be adsorbed by the electrode assembly.

When the embodiment of the present application satisfies the above formula range $0\% \leq \frac{y}{m_2} \leq 5\%$ , it is possible to further improve the use reliability of the battery cell. Exemplarily, $\frac{y}{m_2}$ may be 0%, 0.001%, 0.002%, 0.003%, 0.004%, 0.005%, 0.006%, 0.007%, 0.008%, 0.009%, 0.01%, 0.012%, 0.014%, 0.016%, 0.018%, 0.02%, 0.022%, 0.024%, 0.026%, 0.028%, 0.03%, 0.032%, 0.034%, 0.036%, 0.038%, 0.04%, 0.042%, 0.044%, 0.046%, 0.048%, 0.05%, 0.052%, 0.054%, 0.056%, 0.058%, 0.06%, 0.062%, 0.064%, 0.066%, 0.068%, 0.07%, 0.072%, 0.074%, 0.076%, 0.078%, 0.08%, 0.082%, 0.084%, 0.086%, 0.088%, 0.09%, 0.092%, 0.094%, 0.096%, 0.098%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 4.10%, 4.20%, 4.30%, 4.40%, 4.50%, 4.60%, 4.70%, 4.80%, 4.90%, 5.00% or a range consisting of any two of the above values.

In some embodiments, an amount of the free electrolyte solution per unit capacity of the battery cell is b, with a unit of mg/Ah, wherein 0≤b≤1400. When the amount b of the free electrolyte solution per unit capacity of the battery cell satisfies the above range, it is possible to further improve the use reliability and cycle performance of the battery cell.

Optionally, 0.1≤b≤1000; and further optionally, 0.3≤b≤800. For example, the amount of the free electrolyte

solution per unit capacity of the battery cell may be 0 mg/Ah, 0.001 mg/Ah, 0.002 mg/Ah, 0.003 mg/Ah, 0.004 mg/Ah, 0.005 mg/Ah, 0.006 mg/Ah, 0.007 mg/Ah, 0.008 mg/Ah, 0.009 mg/Ah, 0.01 mg/Ah, 0.02 mg/Ah, 0.03 mg/Ah, 0.04 mg/Ah, 0.05 mg/Ah, 0.06 mg/Ah, 0.07 mg/Ah, 0.08 mg/Ah, 0.09 mg/Ah, 0.1 mg/Ah, 0.2 mg/Ah, 0.3 mg/Ah, 0.5 mg/Ah, 1.0 mg/Ah, 5.0 mg/Ah, 10.0 mg/Ah, 20.0 mg/Ah, 50.0 mg/Ah, 80.0 mg/Ah, 100 mg/Ah, 120 mg/Ah, 150 mg/Ah, 180 mg/Ah, 200 mg/Ah, 220 mg/Ah, 250 mg/Ah, 300 mg/Ah, 350 mg/Ah, 400 mg/Ah, 450 mg/Ah, 500 mg/Ah, 550 mg/Ah, 600 mg/Ah, 650 mg/Ah, 700 mg/Ah, 750 mg/Ah, 800 mg/Ah, 850 mg/Ah, 900 mg/Ah, 950 mg/Ah, 1000 mg/Ah, 1050 mg/Ah, 1100 mg/Ah, 1150 mg/Ah, 1200 mg/Ah, 1250 mg/h, 1300 mg/Ah, 1350 mg/Ah, 1400 mg/Ah or a range consisting of any two of the above values.

In the embodiment of the present application, b is equal to y/x, and x denotes a nominal capacity of the battery cell, with a unit of Ah. y is the mass of the free electrolyte solution mentioned above.

In the embodiment of the present application, x may be detected using methods and devices known in the art, such as a product of all currents that can be output when the battery cell in a fully-charged state is discharged at a constant current and constant voltage of 0.33C to a final voltage and discharge time.

In some embodiments, after a linear frequency sweep vibration test, the battery cell is charged to a 100% state of charge (SOC), a hole is formed in the battery cell, the hole is disposed at the lowest point in the vertical direction, and the mass of an electrolyte solution flowing out of the battery cell is recorded as M1, wherein $0 \leq M1 \leq 6$ g, and optionally, M1 is 0 g; wherein,

a vibration direction of the linear frequency sweep vibration test is: up-and-down single vibration;
a vibration frequency of the linear frequency sweep vibration test is: 10 Hz to 55 Hz;
a maximum acceleration of the linear frequency sweep vibration test is: 30 m/s2;
the number of frequency sweep cycles of the linear frequency sweep vibration test is: 10; and
vibration time of the linear frequency sweep vibration test is: 3 h.

In the related art, during the use of a battery cell, the phenomena such as vibration may occur under external force, an electrolyte solution in an electrode assembly may be separated from the electrode assembly under the action of the vibration to form a free electrolyte solution, while the free electrolyte solution in the battery cell may leak, causing corrosion to the battery cell, which leads to risks such as battery cell failure. In the embodiment of the present application, the electrolyte solution inside the battery cell can be effectively gathered and thrown out by subjecting the battery cell to standing and vibration treatment, and thus whether there is a flowing electrolyte solution between a housing and the electrode assembly of the battery cell is judged more accurately, and the content of the free electrolyte solution is determined. When the battery cell in the embodiment of the present application meets the above conditions, the content of the free electrolyte solution in the battery cell is extremely small, or even the battery cell is substantially free of the free electrolyte solution inside, so that the use reliability and cycle performance of the battery cell can be significantly improved.

Exemplarily, M1 may be 0, 0.05 g, 0.10 g, 0.15 g, 0.20 g, 0.25 g, 0.3 g, 0.35 g, 0.4 g, 0.45 g, 0.5 g, 0.55 g, 0.60 g, 0.65 g, 0.70 g, 0.75 g, 0.80 g, 0.85 g, 0.90 g, 0.95 g, 1.00 g, 1.10 g, 1.20 g, 1.30 g, 1.40 g, 1.50 g, 1.60 g, 1.70 g, 1.80 g, 1.90 g, 2.00 g, 2.10 g, 2.20 g, 2.30 g, 2.40 g, 2.50 g, 2.60 g, 2.70 g, 2.80 g, 2.90 g, 3.00 g, 3.10 g, 3.20 g, 3.30 g, 3.40 g, 3.50 g, 3.60 g, 3.70 g, 3.80 g, 3.90 g, 4.00 g, 4.10 g, 4.20 g, 4.30 g, 4.40 g, 4.50 g, 4.60 g, 4.70 g, 4.80 g, 4.90 g, 5.00 g, 6.00 g or a range consisting of any two of the above values. M1 being 0 g indicates that the amount of the free electrolyte solution is 0, that is, after the battery cell is subjected to the linear frequency sweep vibration test, there is basically no free electrolyte solution inside.

In some embodiments, after the battery cell is subjected to the above-mentioned linear frequency sweep vibration test, the housing is removed, the electrode assembly is taken out and subjected to an extrusion test, and a volume of the electrolyte solution flowing out of the electrode assembly is recorded as M2 (an extrusion device is suspended, and a weighing balance and an electrolyte solution collection container are disposed under it), wherein $0 < M2 < 0.6$ g, and optionally, M2 is 0 g; wherein,

an extrusion direction of the extrusion test is perpendicular to a thickness direction of the electrode assembly; and
an extrusion degree of the extrusion test is: extrusion force is 0.35 MPa.

In the related art, during the use of a battery cell, it may be extruded externally, an electrolyte solution in an electrode assembly may be separated from the electrode assembly under the action of extrusion to form a free electrolyte solution, while the free electrolyte solution in the battery cell may leak, causing corrosion to the battery cell, which leads to risks such as battery cell failure. In the embodiment of the present application, the electrolyte solution inside the battery cell can be effectively extruded to flow out by subjecting the battery cell to the extrusion test, and thus whether there is a flowing electrolyte solution between a housing and the electrode assembly of the battery cell is judged more accurately, and the content of the free electrolyte solution is determined. When the battery cell in the embodiment of the present application meets the above conditions, the content of the free electrolyte solution in the battery cell is extremely small, or even the

battery cell is substantially free of the free electrolyte solution inside, so that the use reliability and cycle performance of the battery cell can be significantly improved.

Exemplarily, M2 may be 0, 0.05 mg, 0.10 mg, 0.15 mg, 0.20 mg, 0.25 mg, 0.3 mg, 0.35 mg, 0.4 mg, 0.45 mg, 0.5 mg, 0.55 mg, 0.60 mg, 0.65 mg, 0.70 mg, 0.75 mg, 0.80 mg, 0.85 mg, 0.90 mg, 0.95 mg, 1.00 mg, 1.10 mg, 1.20 mg, 1.30 mg, 1.40 mg, 1.50 mg, 1.60 mg, 1.70 mg, 1.80 mg, 1.90 mg, 2.00 mg, 2.10 mg, 2.20 mg, 2.30 mg, 2.40 mg, 2.50 mg, 2.60 mg, 2.70 mg, 2.80 mg, 2.90 mg, 3.00 mg, 3.10 mg, 3.20 mg, 3.30 mg, 3.40 mg, 3.50 mg, 3.60 mg, 3.70 mg, 3.80 mg, 3.90 mg, 4.00 mg, 4.10 mg, 4.20 mg, 4.30 mg, 4.40 mg, 4.50 mg, 4.60 mg, 4.70 mg, 4.80 mg, 4.90 mg, 5.00 mg, 10.00 mg, 20.00 mg, 30.00 mg, 40.00 mg, 50.00 mg, 60.00 mg, 70.00 mg, 80.00 mg, 90.00 mg, 100.00 mg, 110.00 mg, 120.00 mg, 130.00 mg, 140.00 mg, 150.00 mg, 160.00 mg, 170.00 mg, 180.00 mg, 190.00 mg, 200.00 mg, 210.00 mg, 220.00 mg, 230.00 mg, 240.00 mg, 250.00 mg, 260.00 mg, 270.00 mg, 280.00 mg, 290.00 mg, 300.00 mg, 310.00 mg, 320.00 mg, 330.00 mg, 340.00 mg, 350.00 mg, 360.00 mg, 370.00 mg, 380.00 mg, 390.00 mg, 400.00 mg, 410.00 mg, 420.00 mg, 430.00 mg, 440.00 mg, 450.00 mg, 460.00 mg, 470.00 mg, 480.00 mg, 490.00 mg, 500.00 mg, 510.00 mg, 520.00 mg, 530.00 mg, 540.00 mg, 550.00 mg, 560.00 mg, 570.00 mg, 580.00 mg, 590.00 mg, 600.00 mg or a range consisting of any two of the above values. M2 being 0 g indicates that the amount of the free electrolyte solution is 0, that is, after the battery cell is subjected to the extrusion test, there is basically no free electrolyte solution inside.

In some embodiments, a voltage of 200 V is provided to the battery cell to form a loop, and within 4 h, an absolute value of the temperature change of the battery cell is <4°C.

For example, a negative terminal and the housing of the battery cell are connected to the 200V voltage to form a current loop. A temperature fluctuation range of the battery cell is less than or equal to 4°C within 4 h, and there is no failure behavior such as fire or explosion. Especially when the free electrolyte solution y=0, the temperature fluctuation range is small and the use reliability of the battery cell is greatly improved.

In some embodiments, each electrode plate contains the lyophilic polymer, specifically, the first electrode plate includes a current collector and an active material layer disposed on at least one surface of the current collector, and the active material layer includes the lyophilic polymer and active material particles. The lyophilic polymer may be disposed only in the first electrode plate, or only in the second electrode plate, or the lyophilic polymer may be disposed in both the first electrode plate and the second electrode plate. The first electrode plate may be a positive electrode plate, and correspondingly, the second electrode plate may be a negative electrode plate; or, the first electrode plate may be a negative electrode plate, and correspondingly, the second electrode plate may be a positive electrode plate.

As some instances, the lyophilic polymer is distributed on the surfaces of the active material particles. It can be understood that the active material particles, a binder and the like are cured to form a film layer on the surface of the current collector, and the lyophilic polymer is disposed on a surface of the film layer facing away from the current collector. Such arrangement may make the electrolyte solution diffuse quickly to the positions between the molecular chains of the lyophilic polymer and be wrapped by the molecular chains, so as to form gel-like substances on the surfaces of the active material particles, which adhere to the surfaces of the active material particles to protect the active material particles. Thereby, the active material particles and the electrolyte solution are closely connected, the performance of a solid-liquid interface is improved, side reactions between the active material particles and the electrolyte solution can be reduced, and the reliability and electrical performance (such as cycle performance and storage performance) of the battery cell can be improved.

Specifically, a preparation process of the electrode plates includes:

adding the active material particles into a solvent to prepare an active slurry;
applying the active slurry to the surface of the current collector and drying and curing the active slurry to form the film layer; and
disposing the lyophilic polymer on a surface of the film layer to form a electrode plate.

As other instances, a plurality of active material particles are provided, a pore exists between every two adjacent active material particles, and the lyophilic polymer is distributed in the pores between the active material particles. Such arrangement form can improve the liquid storage capability of the active material layer, namely the capability of locking the electrolyte solution, thus improving the reliability and electrical performance of the battery cell.

Specifically, a preparation process of the electrode plates in one example includes:

dispersing the lyophilic polymer in a solvent to form a mixed system;
adding the active material particles into the mixed system to prepare a slurry; and
applying the slurry to the surface of the current collector and drying and curing the slurry to form a electrode plate.

Specifically, a preparation process of the electrode plates in another example includes:

dispersing the lyophilic polymer and the active material particles in a solvent to prepare a slurry; and

applying the slurry to the surface of the current collector and drying and curing the slurry to form a electrode plate.

As some further instances, the lyophilic polymer is distributed on the surfaces of the active material particles, and the lyophilic polymer is distributed in the pores between the active material particles.

Specifically, a preparation process of the electrode plates in one example includes:

dispersing the lyophilic polymer and the active material particles in a solvent to prepare a slurry;
applying the slurry to the surface of the current collector and drying and curing the slurry to form the film layer; and
disposing the lyophilic polymer on a surface of the film layer to form a electrode plate.

In other embodiments, the separator contains the lyophilic polymer. Specifically, the separator may include a substrate; and optionally, the separator may further include a coating disposed on at least one surface of the substrate.

As some instances, the substrate is generally of a porous structure having pores, and the lyophilic polymer may be distributed in the pores of the substrate.

As other instances, the lyophilic polymer may be distributed within the coating.

As some further instances, the lyophilic polymer may be disposed on a surface of the coating facing away from the substrate.

The specific distribution position of the lyophilic polymer may be any one of the above three forms, any two of them, or a combination of the above three positions.

In some further embodiments, the lyophilic polymer may be disposed in the electrode plates and the separator. The specific disposition positions are as described above and will not be repeated here.

In some embodiments, the lyophilic polymer may include one or more of a fluorine polymer, an ether polymer, an ester polymer, and a ketone aldehyde polymer.

[Fluorine polymer]

In some embodiments, the lyophilic polymer includes a fluorine polymer, and crystallinity of the fluorinated polymer measured by differential scanning calorimetry is $X_{C1}$%, $0<X_{C1}\leq30$; and a melting temperature of the fluorinated polymer is $T_{m1}$, with a unit of °C, wherein $0<T_{m1}\leq140$.

Crystallization refers to a process in which atoms, ions or molecules in a material are arranged in a certain spatial order to form an orderly structure. The conformation of the polymer in crystallization is determined by both intramolecular and intermolecular factors. The intermolecular force will affect the stacking density between molecular chains. The crystallinity $X_{C1}$% is used to characterize the degree of crystallization in the material, and may be measured by differential scanning calorimetry (DSC). Specifically, test steps are: 0.5 g to 0.8 g of sample is taken and placed in a carrying crucible, temperature raising and lowering treatment is performed on the sample in a nitrogen atmosphere, a temperature is raised from an initial temperature 20°C lower than the intrinsic $T_{g1}$ of the material to a cutoff temperature 20°C higher than the intrinsic $T_{m1}$ of the material at a heating rate of 10°C/min, and an actual glass transition temperature $T_{g1}$ and melting temperature $T_{m1}$ of the material are determined according to endothermic and exothermic peaks or transition points of the material in the process.

As a result, the fluorinated polymer has relatively low crystallinity and melting temperature, which makes the molecular chain arrangement tend to be loose, the interaction force between the molecular chains is small, the adjacent molecular chains are easily opened, and a segmental motion is achieved through intermolecular internal rotation, forming a molecular chain structure with high flexibility; and the fluorinated polymer and the electrolyte solution in the battery cell can form a gel-like substance, improving the use reliability and cycle performance of the battery cell.

Exemplarily, the crystallinity $X_{C1}$% of the fluorinated polymer measured by differential scanning calorimetry may be 5%, 10%, 15%, 20%, 25%, 30% or a range consisting of any two of the above values.

Exemplarily, the melting temperature of the fluorinated polymer may be 10°C, 20°C, 50°C, 70°C, 90°C, 100°C, 120°C, 140°C or a range consisting of any two of the above values.

In some embodiments, the glass transition temperature of the fluorinated polymer is $T_{g1}$, with a unit of °C, wherein $-150\leq T_{g1}\leq60$.

The glass transition temperature is a transition temperature at which chain segments of the polymer are changed from freezing to movement. The glass transition temperature has a certain influence on the flexibility of the molecular chains of the polymer. The lower the glass transition temperature, the better the flexibility of the molecular chains of the polymer at the room temperature, and the higher the glass transition temperature, the worse the flexibility of the molecular chains at the room temperature. The glass transition temperature may be measured by differential scanning calorimetry (DSC). The glass transition temperature of the polymer is relatively low, the flexibility of the chain segments of the molecular chains is better, and the adjacent molecular chains are easier to open. Exemplarily, the glass transition temperature of the fluorinated polymer may be -150°C, - 120°C, -100°C, -80°C, -60°C, -30°C, 0°C, 30°C, 60°C or a range

consisting of any two of the above values.

In some embodiments, the fluorinated polymer includes at least one of a structural unit represented by Formula (AI) to a structural unit represented by Formula (AIII),

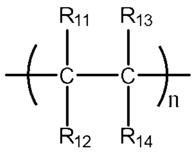 Formula (AI), 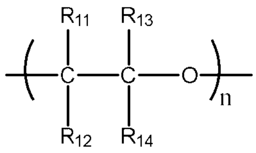 Formula (AII),

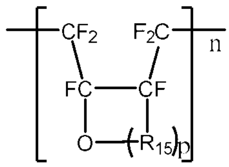 Formula (AIII);

in Formula (AI) and Formula (AII), $R_{11}$, $R_{12}$, $R_{13}$ and $R_{14}$ each independently include a hydrogen atom, a fluorine atom, a chlorine atom, a substituted or unsubstituted C1-C3 alkyl group or a substituted or unsubstituted C1-C3 alkoxy group, and at least one of $R_{11}$, $R_{12}$, $R_{13}$ and $R_{14}$ includes a fluorine atom; and when substituted, a substituent may include one or more of a nitrile group (-CN), a nitro group, a sulfonic group, a sulfonyl group, amide, a carboxyl group, an ester group, and a halogen atom.

in Formula (AIII), $R_{15}$ includes a single bond, and a substituted or unsubstituted C1-C3 alkyl group; when substituted, a substituent may include one or more of a nitrile group (-CN), a nitro group, a sulfonic group, a sulfonyl group, amide, a carboxyl group, an ester group, and a halogen atom. p is a positive integer selected from 1 to 3. n is a positive integer selected from 1000 to 30000.

In some embodiments, $R_{11}$, $R_{12}$, $R_{13}$ and $R_{14}$ each independently include a hydrogen atom, a fluorine atom, a chlorine atom, a substituted or unsubstituted C1-C2 alkyl group, or a substituted or unsubstituted C1-C2 alkoxy group; and further optionally, $R_{11}$, $R_{12}$, $R_{13}$ and $R_{14}$ each independently include a hydrogen atom, a fluorine atom, a chlorine atom, methyl, fluoromethyl, methoxy or perfluoromethoxy.

In some embodiments, the fluorinated polymer includes at least one of a structural unit represented by Formula (AI-1) to a structural unit represented by Formula (AI-11),

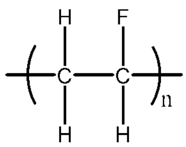 Formula (AI-1), 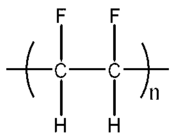 Formula (AI-2), 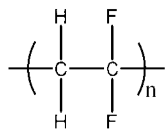 Formula (AI-3),

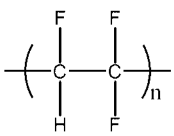 Formula (AI-4), 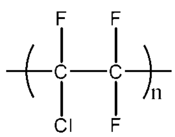 Formula (AI-5), 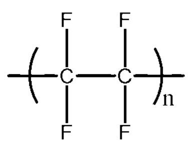 Formula (AI-6),

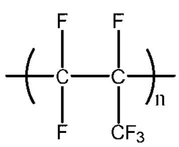 Formula (AI-7), 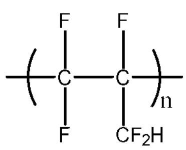 Formula (AI-8), 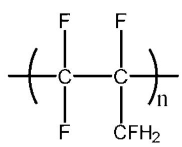 Formula (AI-9),

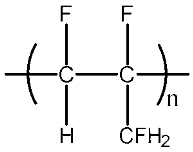 Formula (AI-10), 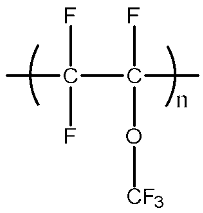 Formula (AI-11).

In some embodiments, the fluorinated polymer includes at least one of a structural unit represented by Formula (AII-1) to a structural unit represented by Formula (AII-5),

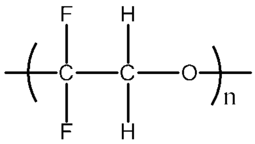 Formula (AII-1), 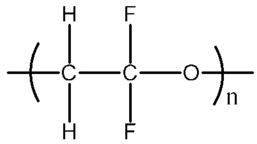 Formula (AII-2),

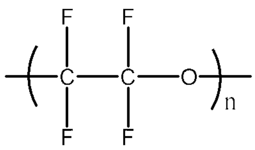 Formula (AII-3), 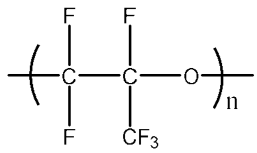 Formula (AII-4),

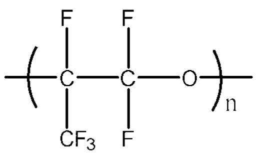 Formula (AII-5).

In some embodiments, the fluorinated polymer includes at least one of a structural unit represented by Formula (AIII-1) to a structural unit represented by Formula (AIII-3),

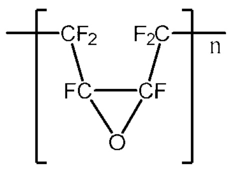 Formula (AIII-1), 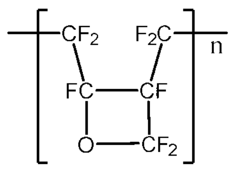 Formula (AIII-2),

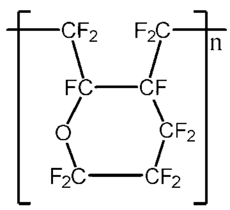 Formula (AIII-3).

Exemplarily, the fluorinated polymer includes one or more of polytetrafluoroethylene (PTFE), polyvinylidene fluoride (PVDF), fluorinated ethylene propylene (FEP), perfluoroalkoxy (PFA), perfluoropolyether (PFPE), poly(vinylidene fluoride-co-hexafluoropropylene) (PVDF-HFP), poly(vinylidene fluoride-co-trifluoro ethylene) (PVDF-TrFE) and a perfluoro(1-butenyl vinyl ether) polymer (CYTOP).

Optionally, the fluorinated polymer includes one or more of polytetrafluoroethylene (PTFE), polyvinylidene fluoride (PVDF), fluorinated ethylene propylene (FEP), poly(vinylidene fluoride-co-hexafluoropropylene) (PVDF-HFP), and poly(vinylidene fluoride-co-trifluoro ethylene) (PVDF-TrFE).

The fluorinated polymer above may be derived from one or more of the following monomers: fluorocyclohexane, vinyl fluoride, 1,2-difluoroethylene, vinylidene fluoride, trifluoroethylene, chlorotrifluoroethylene, tetrafluoroethylene,

hexafluoropropylene, 3,3,3-trifluoropropylene, trifluoropropylene, tetrafluoropropylene, pentafluoropropylene, etc. Optionally, the fluorinated polymer above may be derived from at least two of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene.

The monomers used in the above fluorinated polymer are all short-chain monomers, which are conducive to polymerization to form straight-chain linear structures or short-chain branch structures. Such structure type has a low degree of entanglement, which is conducive to improving the flexibility of the molecular chains. The molecular chains can fully stretch in the electrolyte solution, thereby further improving the interfacial properties of the active substance.

In some embodiments, n is a positive integer selected from 5000 to 20000; and/or the molecular weight of the lyophilic polymer is $2\times10^5$ g/mol to $1.5\times10^6$ g/mol. When the molecular weight of the polymer is within the above range, it can ensure that the polymer exhibits a certain solubility in the electrolyte solution, while being not prone to being completely dissolved and dispersed by the electrolyte solution, which is beneficial to regulating the distribution and dispersion of the polymer on the surface of the active substance. It can further improve the flexibility between the molecular chains of the polymer, and the interaction force between the molecular chains is relatively weak, which is beneficial for solvent molecules in the electrolyte solution to open the molecular chains, enter between the molecular chains, and be wrapped by the molecular chains, thereby facilitating the entry of active ions into the active substance through a solvent, thereby realizing the smooth and rapid migration of the active ions.

Exemplarily, the molecular weight of the polymer may be $2\times10^5$ g/mol, $5\times10^5$ g/mol, $8\times10^5$ g/mol, $1\times10^6$ g/mol, $1.5\times10^6$ g/mol, or a range consisting of any two of the above values.

[Ether polymer]

In some embodiments, the lyophilic polymer includes an ether polymer, and the ether polymer is made into a sheet-like structural body; the sheet-like structural body is subjected to a dynamic frequency scanning test at $(T_{m2}+20)$°C to obtain an elastic modulus G'-loss modulus G" curve, and a slope of the elastic modulus G'-loss modulus G" curve is $K_1$, wherein $1<K_1<\infty$, and $T_{m2}$°C represents a melting temperature of the ether polymer.

Specifically, a preparation process of the sheet-like structural body is as follows: the ether polymer is vacuum dried at 80°C for 12 h. The dried ether polymer is hot-pressed into a thin sheet by a flat vulcanizer. A hot pressing temperature is set to $(T_{m2}+20)$°C, a calendering thickness is 1-2 min, calendering time is 2 min, and a pressure is 8 MPa. After calendering for 2 min, a sample is taken out and placed on another vulcanizer of the same model for cold pressing at a cold pressing pressure of 10 MPa. A round die with a diameter of 25 mm can be used to obtain a polymer discs (sheet-like structural body) of a fixed size. Exemplarily, the sheet-like structural body may be a disc with a thickness of 1-2 mm and a diameter of 25 mm; or the sample may be prepared according to a sample standard required by a testing device.

According to the conclusions of classical linear viscoelasticity, for polymers, especially linear polymers, elastic modulus G'-loss modulus G" in a terminal region of the elastic modulus G'-loss modulus G" curve (an interval approaching a maximum angular velocity) conforms to the frequency dependence, and a longest chain of the polymers plays a role in the viscoelastic behavior.

The dynamic frequency scanning test has the following specific steps: the dynamic frequency scanning test is performed using a TA-AR2000EX rotational rheometer (TAinstruments, USA), with a parallel plate having a diameter of 25 mm and a thickness of 0.9 mm. To ensure that the test is conducted in a linear viscoelastic region, during the dynamic frequency scanning test, strain is 2%, a test temperature is $T_{m2}+20$°C, and a frequency scanning range of the test is: 500 rad/s$\leq w^2 \leq$0.05 rad/s, so as to obtain data in a lowest possible frequency region.

The dynamic frequency scanning test may characterize the degree of entanglement of molecular chains under solid phase melting (melt state). Compared with linear structures or short-chain branch structures, long branched structures, network structures and low cross-linked structures have a high degree of entanglement and will show deviation from linear terminal behaviors. The ether polymer shows a solid phase behavior. When the ether polymer of the present application meets the above range, the entanglement state of the molecular chains may be further reduced, which is beneficial to the diffusion of solvent molecules in the electrolyte solution between the molecular chains; and the ether polymer still maintains a certain molecular chain entanglement state, and can form a gel-like substance with the electrolyte solution, thereby improving the cycle performance and storage performance of the battery cell.

In some embodiments, $1<K_1\leq100$; and optionally, $1<K_1\leq10$. Exemplarily, $K_1$ may be 0.8, 0.9, 1, 2, 5, 10, 15, 20, 30, 50, 100, 200, 500, 1000, 5000, 10000 or a range consisting of any two of the above values.

In some embodiments, a glass transition temperature of the ether polymer is $T_{g2}$, with a unit of °C, wherein $-100\leq T_{g2}\leq50$; and optionally, $-80\leq T_{g2}\leq30$. Exemplarily, the glass transition temperature of the ether polymer may be -100°C, -80°C, -60°C, -30°C, 0°C, 30°C, 50°C or a range consisting of any two of the above values.

In some embodiments, the ether polymer includes a structural unit represented by Formula (BI),

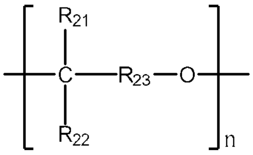
Formula (BI);

in Formula (BI), $R_{21}$ and $R_{22}$ each independently include a hydrogen atom, a substituted or unsubstituted C1-C3 alkyl group, or a substituted or unsubstituted C1-C3 alkoxy group; $R_{23}$ includes a substituted or unsubstituted C1-C5 methylene group; optionally, $R_{21}$ and $R_{22}$ each independently include a hydrogen atom, and a substituted or unsubstituted C1-C2 alkyl group; and/or $R_{23}$ includes a single bond, and a substituted or unsubstituted C1-C4 methylene group.

In some embodiments, during substitution, a substituent may include one or more of a nitrile group (-CN), a nitro group, a sulfonic group, a sulfonyl group, amide, a carboxyl group, an ester group, and a halogen atom.

Exemplarily, the ether polymer includes at least one of a structural unit represented by Formula (BI-1) to a structural unit represented by Formula (BI-8),

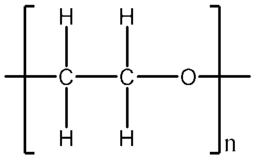
Formula (BI-1),
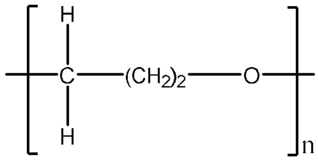
Formula (BI-2),

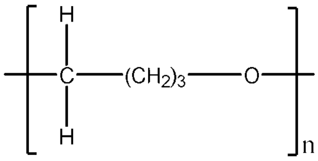
Formula (BI-3),
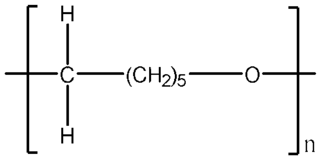
Formula (BI-4),

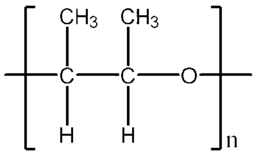
Formula (BI-5),
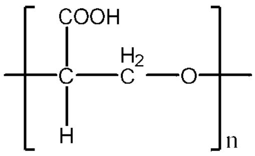
Formula (BI-6),

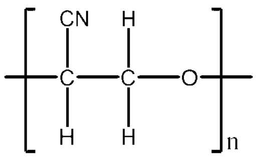
Formula (BI-7),
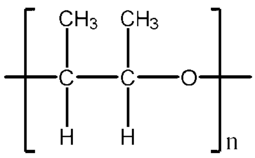
Formula (BI-8).

In some embodiments, the ether polymer includes a structural unit represented by Formula (BII),

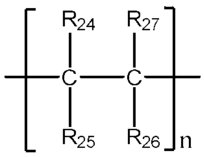
Formula (BII);

in Formula (BII), $R_{24}$ to $R_{27}$ each independently comprise a hydrogen atom, a substituted or unsubstituted C1-C3 alkyl group, a substituted or unsubstituted C1-C3 alkoxy group or an ether group, and at least one of $R_{24}$ to $R_{27}$ comprises a substituted or unsubstituted C1-C3 alkoxy group or an ether group.

Optionally, $R_{24}$ to $R_{27}$ each independently include a hydrogen atom, a substituted or unsubstituted C1-C2 alkyl group, a substituted or unsubstituted C1-C2 alkoxy group or an ether group, and at least one of $R_{24}$ to $R_{27}$ includes a substituted or unsubstituted C1-C2 alkoxy group or an ether group.

In some embodiments, the ether polymer includes at least one of a structural unit represented by Formula (BII-1) to a structural unit represented by Formula (BII-7),

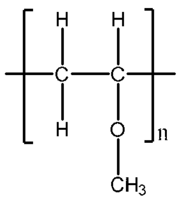 Formula (BII-1), 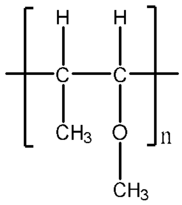 Formula (BII-2), 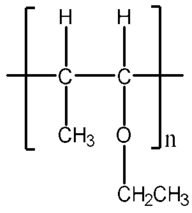 Formula (BII-3),

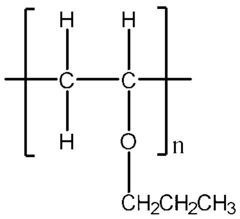 Formula (BII-4), 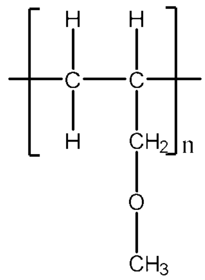 Formula (BII-5),

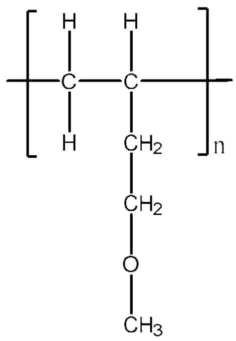 Formula (BII-6), 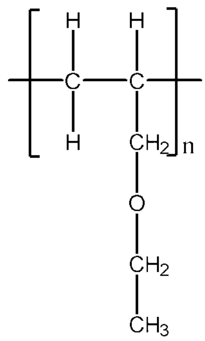 Formula (BII-7).

The monomers used in the above ether polymer are polycyclic structures, such as structures with six-membered rings or less, or short-chain monomers, which is conducive to the polymerization to form a high-content -O- structure. Such structure type has a low degree of entanglement, which is conducive to improving the flexibility of the molecular chains. The molecular chains can fully stretch in the electrolyte solution and form a gel-like substance with the electrolyte solution easily, thereby improving the cycle performance and storage performance of the battery cell.

The above polymers are merely examples of structural groups of main molecular chains. In the embodiments of the present application, the polymers may also be obtained by copolymerization of the above structural groups with other types of structural groups (e.g., olefin structural units, acrylonitrile structural units, etc.).

During substitution of the above groups, a substituent may include one or more of a nitrile group (-CN), a nitro group, a sulfonic group, a sulfonyl group, amide, a carboxyl group, an ester group, and a halogen atom. The above substituents are high pressure resistant substituents and are more conducive to stabilizing the structure of the polymer. The halogen atom may include a fluorine atom, a chlorine atom, a bromine atom, etc.

In some embodiments, n is a positive integer selected from 1500 to 25000.

Optionally, n is a positive integer selected from 3000 to 18000.

In some embodiments, a molecular weight of the polymer is $1.2\times10^5$ g/mol to $1.0\times10^6$ g/mol.

Exemplarily, the molecular weight of the polymer may be $1.2\times10^5$ g/mol, $2\times10^5$ g/mol, $5\times10^5$ g/mol, $8\times10^5$ g/mol, $1\times10^6$ g/mol, or a range consisting of any two of the above values.

[Ester polymer]

In some embodiments, the lyophilic polymer includes an ester polymer, wherein the ester polymer is made into a sheet-like structural body; and the sheet-like structural body is subjected to a dynamic frequency scanning test at ($T_{m3}$ +20)°C to obtain an elastic modulus G'-loss modulus G" curve, and a slope of the elastic modulus G'-loss modulus G" curve

is $K_2$, wherein $1<K_2<\infty$, and $T_{m3}$°C represents a melting temperature of the ester polymer.

When the ester polymer of the present application meets the above range, the entanglement state of the molecular chains may be further reduced, which is beneficial to the diffusion of solvent molecules in the electrolyte solution between the molecular chains; and the ether polymer still maintains a certain molecular chain entanglement state, and can form a gel-like substance with the electrolyte solution, thereby improving the cycle performance and storage performance of the battery cell.

In some embodiments, $1<K_2\leq 100$; and optionally, $1<K_2\leq 10$.

Exemplarily, $K_2$ may be 1.01, 1.1, 1.2, 1.5, 2, 5, 10, 15, 20, 30, 50, 100, 200, 500, 1000, 5000, 10000 or a range consisting of any two of the above values.

In some embodiments, a glass transition temperature of the ester polymer is $T_{g3}$, with a unit of °C, wherein $-100\leq T_{g3}\leq 50$; and optionally, $-80\leq T_{g3}\leq 30$.

Exemplarily, the glass transition temperature of the ester polymer may be -100°C, -90°C, -80°C, -60°C, -30°C, 0°C, 30°C, 50°C or a range consisting of any two of the above values.

In some embodiments, the ester polymer includes a structural unit represented by Formula (CI),

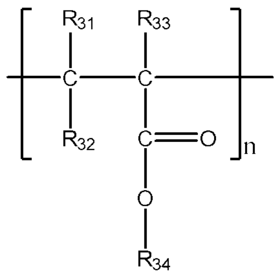
Formula (CI);

in Formula (CI), $R_{31}$, $R_{32}$ and $R_{33}$ each independently include a hydrogen atom, or a substituted or unsubstituted C1-C8 alkyl group; $R_{34}$ includes a substituted or unsubstituted C1-C8 alkyl group, or a substituted or unsubstituted C1-C8 hydroxyalkyl group; and optionally, $R_{34}$ includes a substituted or unsubstituted C1-C6 alkyl group, or a substituted or unsubstituted C1-C6 hydroxyalkyl group.

Optionally, $R_{31}$ includes a hydrogen atom, or a substituted or unsubstituted methyl group; $R_{32}$ and $R_{33}$ each independently include a hydrogen atom; and $R_{34}$ includes a substituted or unsubstituted C1-C4 alkyl group, or a substituted or unsubstituted C1-C4 hydroxyalkyl group.

Exemplarily, the ester polymer includes at least one of a structural unit represented by Formula (CI-1) to a structural unit represented by Formula (CI-15),

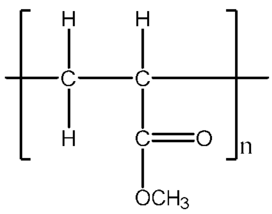
Formula (CI-1),

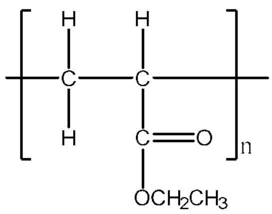
Formula (CI-2),

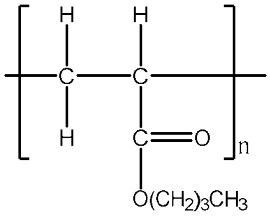
Formula (CI-3),

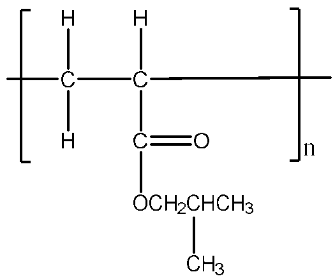
Formula (CI-4),

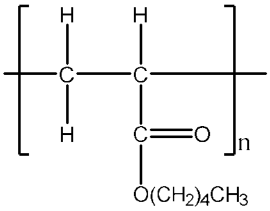 Formula (CI-5), 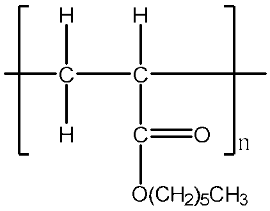 Formula (CI-6),

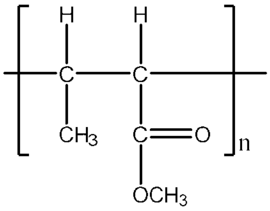 Formula (CI-7), 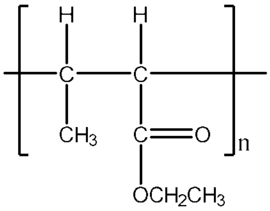 Formula (CI-8),

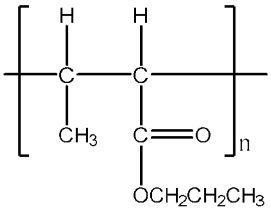 Formula (CI-9), 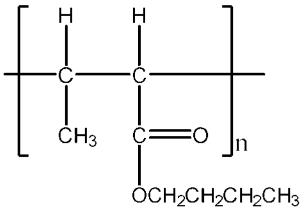 Formula (CI-10),

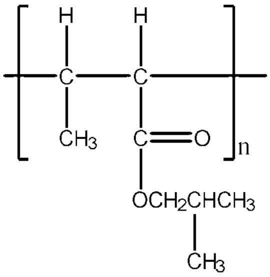 Formula (CI-11), 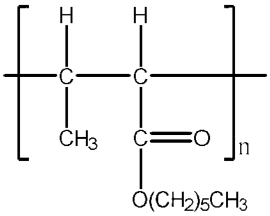 Formula (CI-12),

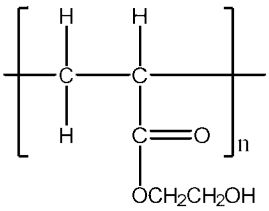 Formula (CI-13), 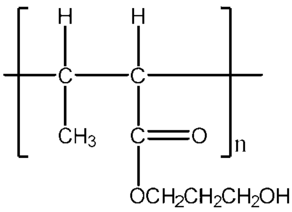 Formula (CI-14),

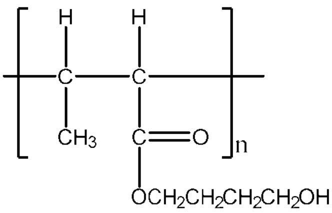 Formula (CI-15).

In some embodiments, the ester polymer includes a structural unit represented by Formula (CII),

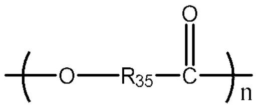
Formula (CII);

in Formula (CII), $R_{35}$ comprises a substituted or unsubstituted C2-C6 methylene group; and optionally, $R_{35}$ each independently comprises a substituted or unsubstituted C2-C4 methylene group.

Exemplarily, the ester polymer includes at least one of a structural unit represented by Formula (CII-1) to a structural unit represented by Formula (CII-5),

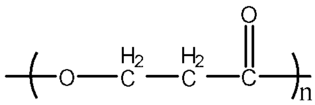
Formula (CII-1),
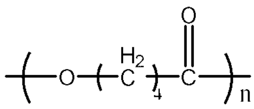
Formula (CII-2),

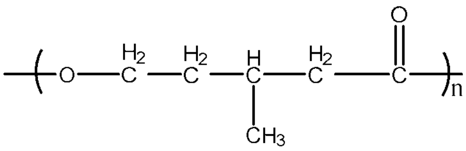
Formula (CII-3),
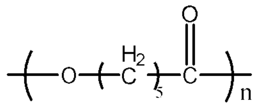
Formula (CII-4),

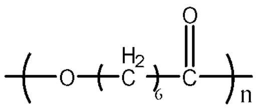
Formula (CII-5).

The above ester polymer has a low degree of entanglement of the molecular chains, which is conducive to improving the flexibility of the molecular chains. The molecular chains can fully stretch in the electrolyte solution and form a gel-like substance with the electrolyte solution easily.

The above polymers are merely examples of structural groups of main molecular chains. In the embodiments of the present application, the polymers may also be obtained by copolymerization of the above structural groups with other types of structural groups (e.g., olefin structural units, acrylonitrile structural units, and monomers with functional groups, such as maleic anhydride).

During substitution of the above groups, a substituent may include one or more of a nitrile group, a nitro group, a sulfonyl group, a carboxyl group, an ester group, a chlorine atom, a fluorine atom, and a bromine atom. The above substituents are high pressure resistant substituents and are more conducive to stabilizing the structure of the polymer.

In some embodiments, n is a positive integer selected from 800 to 20000.

Optionally, n is a positive integer selected from 1000 to 15000.

In some embodiments, a molecular weight of the polymer is $1.2\times10^5$ g/mol to $1.0\times10^6$ g/mol.

Exemplarily, the molecular weight of the polymer may be $1.2\times10^5$ g/mol, $2\times10^5$ g/mol, $5\times10^5$ g/mol, $8\times10^5$ g/mol, $1\times10^6$ g/mol, $1.5\times10^6$ g/mol, or a range consisting of any two of the above values.

[Ketone aldehyde polymer]

In some embodiments, the lyophilic polymer includes an aldehyde ketone polymer, wherein the aldehyde ketone polymer is made into a sheet-like structural body; and the sheet-like structural body is subjected to a dynamic frequency scanning test at $(T_{m4}+20)$°C to obtain an elastic modulus G'-loss modulus G" curve, and a slope of the elastic modulus G'-loss modulus G" curve is $K_3$, wherein $0.8\leq K_3<\infty$, and $T_{m4}$°C represents a melting temperature of the aldehyde ketone polymer.

In some embodiments, $0.8\leq K_3\leq 100$; and optionally, $0.8\leq K_3\leq 10$.

Exemplarily, $K_3$ may be 0.8, 0.9, 1, 2, 5, 10, 15, 20, 30, 50, 100, 200, 500, 1000, 5000, 10000 or a range consisting of any two of the above values.

In some embodiments, a glass transition temperature of the aldehyde ketone polymer is $T_{g4}$, with a unit of °C, wherein $-100\leq T_{g4}\leq 50$; and optionally, $-80\leq T_{g4}\leq 30$.

Exemplarily, the glass transition temperature of the aldehyde ketone polymer may be -100°C, -90°C, -80°C, -60°C, -30°C, 0°C, 30°C, 50°C or a range consisting of any two of the above values.

In some embodiments, the aldehyde ketone polymer includes a structural unit represented by Formula (DI),

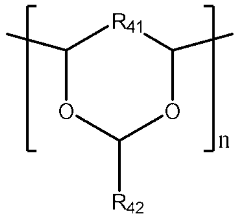

Formula (DI);

in Formula (DI), $R_{41}$ comprises a single bond, and a substituted or unsubstituted C1-C6 methylene group; and $R_{42}$ comprises a hydrogen atom, and a substituted or unsubstituted C1-C6 alkyl group;
optionally, $R_{41}$ includes a single bond, and a substituted or unsubstituted C1-C2 methylene group; and
optionally, $R_{42}$ includes a hydrogen atom, and a substituted or unsubstituted C1-C3 alkyl group.

In the embodiment of the present application, the single bond indicates the absence of a group and the connection of atoms on both sides of the group by the single bond. For example, $R_{41}$ is a single bond, which indicates that carbon atoms on both sides of $R_{41}$ are connected by the single bond.

Exemplarily, the aldehyde ketone polymer includes at least one of a structural unit represented by Formula (DI-1) to a structural unit represented by Formula (DI-6),

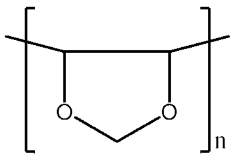

Formula (DI-1),

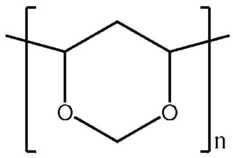

Formula (DI-2),

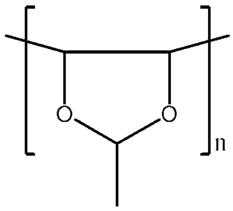

Formula (DI-3),

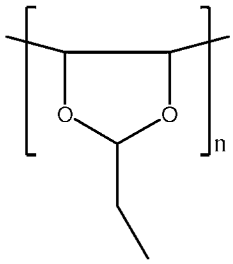

Formula (DI-4),

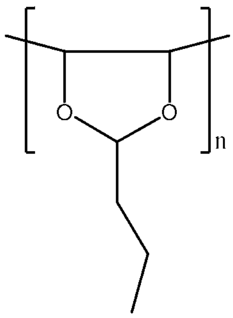

Formula (DI-5),

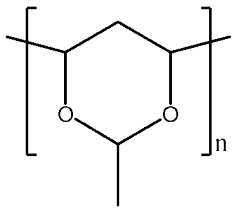

Formula (DI-6).

Exemplarily, the aldehyde ketone polymer includes a structural unit represented by Formula (DII),

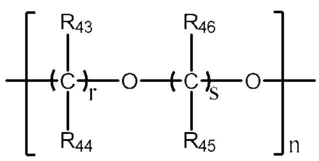

Formula (DII);

in Formula (DII), $R_{43}$ to $R_{46}$ each independently include a hydrogen atom, a hydroxyl group, a substituted or unsubstituted

C1-C3 alkyl group, a substituted or unsubstituted C1-C3 hydroxyalkyl group, or a substituted or unsubstituted C1-C3 alkoxy group; r and s are each independently selected from integers in a range of 0 to 5, and at least one of r and s is selected from positive integers; and optionally, $R_{43}$ to $R_{46}$ each independently include a hydrogen atom, a hydroxyl group, a substituted or unsubstituted C1-C3 alkyl group, a substituted or unsubstituted C1-C2 hydroxyalkyl group, or a substituted or unsubstituted C1-C2 alkoxy group.

In some embodiments, the aldehyde ketone polymer includes at least one of a structural unit represented by Formula (DII-1) to a structural unit represented by Formula (DII-4),

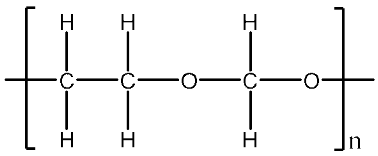
Formula (DII-1),
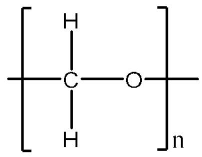
Formula (DII-2),

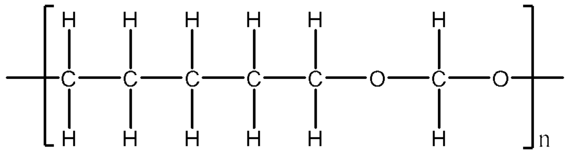
Formula (DII-3),

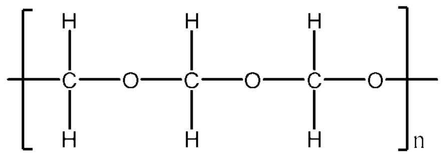
Formula (DII-4).

The above aldehyde ketone polymer has a low degree of entanglement of the molecular chains, which is conducive to improving the flexibility of the molecular chains. The molecular chains can fully stretch in the electrolyte solution and is conducive to forming a gel-like substance with the electrolyte solution.

The above polymers are merely examples of structural groups of main molecular chains. In the embodiments of the present application, the polymers may also be obtained by copolymerization of the above structural groups with other types of structural groups (e.g., olefin structural units, enol structural units, acrylonitrile structural units, etc.).

During substitution of the above groups, a substituent may include one or more of a nitrile group (-CN), a nitro group, a sulfonyl group, a carboxyl group, an ester group, a chlorine atom, a fluorine atom, and a bromine atom. The above substituents are high pressure resistant substituents and are more conducive to stabilizing the structure of the polymer.

In some embodiments, n is a positive integer selected from 500 to 15000.

Optionally, n is a positive integer selected from 500 to 10000.

In some embodiments, a molecular weight of the polymer is $1.2\times10^5$ g/mol to $1.0\times10^6$ g/mol.

Exemplarily, the molecular weight of the polymer may be $1.2\times10^5$ g/mol, $2\times10^5$ g/mol, $5\times10^5$ g/mol, $8\times10^5$ g/mol, $1\times10^6$ g/mol, $1.0\times10^6$ g/mol, or a range consisting of any two of the above values.

The above polymers are merely examples of structural groups of main molecular chains. In the embodiments of the present application, the polymers may also be obtained by copolymerization of the above structural groups with a few amount of other types of structural groups (e.g., olefin structural units, ester monomers, nitrile monomers, amide monomers and other structural units).

When the lyophilic polymer in the embodiment of the present application further satisfies one or more of the following conditions, it is possible to further improve both the use reliability and the cycle performance of the battery cell.

In some embodiments, the lyophilic polymer is added into a first solvent at 70°C to form a polymer system; the polymer system is allowed to stand at 70°C for 8 h, after standing at 25°C for >24 h and experiencing two stages of standing treatment, part of the polymer system is transformed into a gel-state substance through swelling and adsorption, and then the polymer system is filtered through a 200-mesh filter to leave a remaining first substance. The mass of the lyophilic polymer is n, and its unit is g; the mass of the first substance is m, and its unit is g; the polymer and the first substance satisfy: $5\leq m/n\leq1000$; optionally, $10\leq m/n\leq1000$; and further optionally, $10\leq m/n\leq50$. Exemplarily, m/n may be 5, 10, 20, 25, 28, 30, 32, 35, 40, 50, 80, 100, 200, 500, 1000 or a range consisting of any two of the above values.

Exemplarily, based on the mass of the polymer system, a ratio of the mass content of the lyophilic polymer to the mass content of the first solvent is in a range from 1:100 to 1:10, for example, 3:50.

Exemplarily, the first solvent is the same as or similar to the solvent of the electrolyte solution, and the first solvent

may include a carbonate solvent. For example, the carbonate solvent includes a cyclic carbonate solvent and/or a linear carbonate solvent.

As instances of the cyclic carbonate solvent, the cyclic carbonate solvent includes one or more of ethylene carbonate (EC), vinylene carbonate (VC), fluoroethylene carbonate (FEC), difluoroethylene carbonate (DFEC), vinyl ethylene carbonate (VEC), and dicaprylyl carbonate (CC).

As instances of the linear carbonate solvent, the linear carbonate solvent includes one or more of dimethyl carbonate (DMC), diethyl carbonate (DEC), ethyl methyl carbonate (EMC), diphenyl carbonate (DPC), methyl allyl carbonate (MAC), and polycarbonate (VA).

Optionally, the first solvent may also contain a lithium salt and an electrolyte solution additive simultaneously, such as lithium hexafluorophosphate, vinylene carbonate (VC), and fluorovinylene carbonate (FEC).

In the present application, m/n is also referred to as a precipitation value, which characterizes the ability of the lyophilic polymer and the solvent to transform into the gel-state substance.

The first substance mainly includes the gel-state substance formed by the lyophilic polymer and the first solvent. In such gel-state substance, the molecular structure of the polymer substantially has no change.

In some embodiments, the first substance is dried at 80°C for 12 h to remove the first solvent in the first substance, and the dried first substance is mainly composed of the lyophilic polymer described above, as detected by infrared spectrophotometry (IR) or nuclear magnetic resonance (NMR).

Relevant parameters of the lyophilic polymer in the embodiment of the present application may be detected by the following method:

the groups of the lyophilic polymer in the embodiment of the present application may be detected by infrared spectrophotometry (IR), and specifically, the lyophilic polymer is tested by a Thermo Nicolet Nexus 670 attenuated total reflection Fourier transform infrared spectrometer (FTIR-ATR), and then tested with reference to the standard GB/T6040-2002, testing range: ATR method 600-4000 $cm^{-1}$; repeatability: $\pm 2$ $cm^{-1}$; resolution: better than 4 $cm^{-1}$; and transmission depth 0.2-0.6 $\mu$m.

The structure of the lyophilic polymer in the embodiment of the present application may be tested by nuclear magnetic resonance (NMR). Specifically, 1H NMR and 13C NMR are performed on a Varian Mercury Plus-400 nuclear magnetic resonance instrument, wherein a testing temperature is 20°C, TMS is the internal standard, $CDCl_3$ is used as a solvent, and a proton resonance frequency is 400 MHz.

A polymer monomer type of the lyophilic polymer in the embodiment of the present application (especially suitable for monomers that account for a relatively small proportion in the polymer) may be tested by pyrolysis-gas chromatography-mass spectrometry, and specific testing steps are as follows: 0.5 mg of sample is accurately weighed and placed into a sample cup, after the sample cup is fixed to a sample injection rod, the sample cup is placed into a pyrolyzer installed near a GC (gas chromatography) sample injection port; after the temperature of the pyrolyzer reaches a set temperature, a sample injection button is pressed, and the sample cup quickly falls into a core of the pyrolyzer by free fall; in an inert gas $N_2$ atmosphere, volatile components are instantly vaporized and carried into a gas chromatography column by carrier gas for separation; and finally, detection is performed by a flame ionization detector (FID) or a mass spectrometer (MS) to obtain a gas chromatogram or a total ion flow diagram.

A molecular weight of the lyophilic polymer in the embodiment of the present application is well known in the art, and may be measured using devices and methods commonly used in the art. Testing may also be performed by gel permeation chromatography (GPC), and specific testing steps are as follows: an appropriate amount of a sample to be tested (a sample concentration is sufficient to ensure 8%-12% shading) is taken, 20 ml of deionized water is added, simultaneously external ultrasonic treatment is performed for 5 min (53 KHz/120 W) to ensure that the sample is completely dispersed, and then the sample is measured according to the standard GB/T19077-2016/ISO 13320:2009.

Alternatively, a multi-angle laser light scattering instrument (MALLS) is used for testing, and specifically, a GPC combined with a Dawn Heleos II multi-angle laser light scattering device, an Optilab T-rEX refractive index (RI) detector and a Visco Star II viscometer (Wyatt Technology Corporation, USA) is used. The test is carried out at 30°, tetrahydrofuran is used as a mobile phase, testing is performed at a flow rate of 1.0 ml/min, and commercial software ASTRA6 is used to process SEC-SAMLL data to obtain molecular weight parameters.

[Positive electrode plate]

The positive electrode plate includes a positive electrode current collector and a positive electrode active material layer disposed on the positive electrode current collector, and the positive electrode active material layer includes a positive electrode active material and a lyophilic polymer.

As an instance, the positive electrode current collector has two opposite surfaces in its own thickness direction, and the positive electrode active material layer is disposed on either or both of the two opposite surfaces of the positive electrode current collector.

The positive electrode active material layer includes the positive electrode active material, and a positive

electrode active material for a battery cell well-known in the art may be used as the positive electrode active material. As an instance, the positive electrode active material may include at least one of the following materials: a lithium-containing phosphate compound, a lithium-containing transition metal oxide, a sodium-containing phosphate compound and a sodium-containing transition metal oxide.

Exemplarily, a general formula of an olivine-type phosphate active material (lithium-containing phosphate compound) is: $Li_xA_yMe_aM_bP_{1-c}X_cY_z$, wherein $0 \le x \le 1.3$, $0 \le y \le 1.3$, and $0.9 \le x+y \le 1.3$; $0.9<a<1.5$, $0<b<0.5$, and $0.9 \le a+b \le 1.5$; $0 \le c \le 0.5$; and $3 \le z \le 5$. A includes one or more of Na, K, and Mg. Me includes one or more of Mn, Fe, Co, and Ni. M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce. X includes one or more of S, Si, Cl, B, C, and N. Y includes one or more of O and F. Specifically, the olivine-type phosphate active material includes one or more of $LiFePO_4$, $LiMnPO_4$, $LiNiPO_4$, and $LiCoPO_4$.

Exemplarily, the lithium transition metal oxide (a layered material, such as ternary, lithium/sodium nickel oxide, lithium/sodium cobalt oxide, lithium/sodium manganese oxide, and lithium-rich layered and rock salt phase layered materials). A general formula of the layered-structure positive electrode active material is: $Li_xA_yNi_aCo_bMn_cM_{(1-a-b-0)}Y_z$, wherein $0 \le x \le 2.1$, $0 \le y \le 2.1$, and $0.9 \le x+y \le 2.1$; $0 \le a \le 1$, $0 \le b \le 1$, $0 \le c \le 1$, and $0.1 \le a+b+c \le 1$; and $1.8<z<3.5$. A includes one or more of Na, K, and Mg. M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce. Y includes one or more of O and F. Optionally, y=0. Specifically, the layered-structure positive electrode active material may include one or more of lithium cobalt oxide (LCO), lithium nickel oxide (LNO), lithium manganese oxide (LMO), $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811) and NCA.

In some embodiments, the positive electrode current collector may be a metal foil or a composite current collector. As an instance of the metal foil, an aluminum foil or an aluminum alloy foil may be used. The composite current collector may include a high molecular material substrate layer and a metal material layer formed on at least one surface of the high molecular material substrate layer. As an instance, the metal material may include a combination of one or more of aluminium, aluminium alloy, nickel, nickel alloy, titanium, titanium alloy, silver and silver alloy. The high molecular material substrate layer may include a combination of one or more of polypropylene (PP), polyethylene terephthalate (PET), polybutylene terephthalate (PBT), polystyrene (PS), and polyethylene (PE).

In some embodiments, the positive electrode active material layer further optionally includes a positive electrode conductive agent. In the embodiment of the present application, there is no particular limitation on the type of the positive electrode conductive agent, and as an instance, the positive electrode conductive agent includes a combination of one or more of superconducting carbon, conductive carbon black, conductive graphite, acetylene black, carbon black, Ketjen black, carbon dots, carbon nanotubes, graphene, and carbon nanofibers. In some embodiments, based on the total mass of the positive electrode active material layer, a mass percentage of the positive electrode conductive agent is 5% or below.

In some embodiments, the positive electrode active material layer further optionally includes a positive electrode binder. In the embodiment of the present application, there is no particular limitation on the type of the positive electrode binder, and as an instance, the positive electrode binder may include a combination of one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin. In some embodiments, based on the total mass of the positive electrode active material layer, a mass percentage of the positive electrode binder is 5% or below. Compared with the crystallinity of the fluorinated polymer in the embodiment of the present application, the crystallinity of the positive electrode binder is higher. Compared with the melting temperature of the fluorinated polymer in the embodiment of the present application, a melting temperature of the positive electrode binder is higher.

The positive electrode active material layer is usually formed by coating the positive electrode current collector with a positive electrode slurry, followed by drying and cold pressing. The positive electrode slurry is generally formed by dispersing the positive electrode active material, the lyophilic polymer, the optional conductive agent, the optional binder and any other components in a solvent and sufficiently stirring the mixture. The solvent may be N-methyl pyrrolidone (NMP), but is not limited thereto. Of course, the preparation of the positive electrode plate is not limited to the above method, and the preparation method described above may also be used.

[Negative electrode plate]

In some embodiments, the negative electrode plate includes a negative electrode current collector and a negative electrode active material layer disposed on at least one surface of the negative electrode current collector and including a negative electrode active material. For example, the negative electrode current collector has two opposite surfaces in its own thickness direction, and the negative electrode active material layer is disposed on either or both of the two opposite surfaces of the negative electrode current collector.

A negative electrode active material for a battery cell well-known in the art may be used as the negative electrode active material. As an instance, the negative electrode active material may include, but not limited to, at least one of natural

graphite, artificial graphite, soft carbon, hard carbon, a silicon-based material, a tin-based material, and lithium titanate. The silicon-based material may include at least one of elemental silicon, a silicon oxide, a silicon-carbon composite, a silicon-nitrogen composite, and a silicon alloy. The tin-based material may include at least one of elemental tin, a tin oxide, and a tin alloy

In some embodiments, the negative electrode active material layer further optionally includes a negative electrode conductive agent. In the embodiment of the present application, there is no particular limitation on the type of the negative electrode conductive agent, and as an instance, the negative electrode conductive agent may include at least one of superconducting carbon, conductive graphite, acetylene black, carbon black, Ketjen black, carbon dots, carbon nanotubes, graphene, and carbon nanofibers. In some embodiments, based on the total mass of the negative electrode active material layer, a mass percentage of the negative electrode conductive agent is ≤5%.

In some embodiments, the negative electrode active material layer further optionally includes a negative electrode binder. In the embodiment of the present application, there is no particular limitation on the type of the negative electrode binder, and as an instance, the negative electrode binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS). In some embodiments, based on the total mass of the negative electrode active material layer, a mass percentage of the negative electrode binder is ≤5%.

In some embodiments, the negative electrode active material layer further optionally includes other auxiliaries. As an instance, the other auxiliaries may include thickeners, such as, carboxymethyl cellulose sodium (CMC), and a PTC thermistor material. In some embodiments, based on the total mass of the negative electrode active material layer, a mass percentage of the other auxiliaries is ≤2%.

In some embodiments, the negative electrode current collector may be a metal foil or a composite current collector. As an instance of the metal foil, a copper foil may be used. The composite current collector may include a high molecular material substrate layer and a metal material layer formed on at least one surface of the high molecular material substrate layer. As an instance, the metal material may include at least one of copper, a copper alloy, nickel, a nickel alloy, titanium, a titanium alloy, silver, and a silver alloy. As an instance, the high molecular material substrate layer may include at least one of polypropylene (PP), polyethylene terephthalate (PET), polybutylene terephthalate (PBT), polystyrene (PS), and polyethylene (PE).

The negative electrode active material layer is usually formed by coating the negative electrode current collector with a negative electrode slurry, followed by drying and cold pressing. The negative electrode slurry is generally formed by dispersing the negative electrode active material, the lyophilic polymer, the optional conductive agent, the optional binder and other optional auxiliaries in a solvent and uniformly stirring the mixture. The solvent may be N-methyl pyrrolidone (NMP) or deionized water, but not limited thereto. Of course, the preparation of the negative electrode plate is not limited to the above method, and the preparation method described above may also be used.

The negative electrode plate does not exclude other additional functional layers other than the negative electrode active material layer. For example, in some examples, the negative electrode plate in the present application further includes a conductive primer coating (e.g., composed of a conductive agent and a binder) sandwiched between the negative electrode current collector and the negative electrode active material layer and arranged on a surface of the negative electrode current collector. In some other examples, the negative electrode plate in the present application further includes a protective layer covering a surface of the negative electrode active material layer.

[Separator]

The separator includes a substrate and a coating disposed on at least one surface of the substrate.

As some instances, the substrate is generally of a porous structure having pores, and the lyophilic polymer may be distributed in the pores of the substrate.

As other instances, the lyophilic polymer may be distributed within the coating.

As some further instances, the lyophilic polymer may be disposed on a surface of the coating facing away from the substrate.

The specific distribution position of the lyophilic polymer may be any one of the above three forms, any two of them, or a combination of the above three positions.

The embodiment of the present application has no particular limitation on the material of the substrate, and any known substrate with good chemical stability and mechanical stability may be selected, such as at least one of glass fiber, nonwoven fabric, polyethylene, polypropylene and polyvinylidene fluoride. The substrate may be a single-layer film or a multi-layer composite film. When the substrate is the multi-layer composite film, the materials of the layers may be the same or different. The substrate is generally of a porous structure having pores, and the lyophilic polymer may be distributed in the pores of the substrate.

In some embodiments, the coating may further include a filler. Further, the filler may include at least one of

inorganic particles and organic particles. The lyophilic polymer may be distributed in the coating.

In some embodiments, the lyophilic polymer may be disposed on a surface of the coating facing away from the substrate.

In some embodiments, a decomposition temperature of the filler may be 200°C or above, so that the filler may have the characteristics of good thermal stability and being difficult to decompose, thereby further improving the heat resistance of the separator.

The inorganic particles have the characteristics of high thermal stability and bing difficult to decompose. Optionally, the inorganic particles include at least one of inorganic particles having a dielectric constant of 5 or above, inorganic particles having ion conductivity but not storing ions, and inorganic particles capable of undergoing electrochemical reactions.

Optionally, the inorganic particles having the dielectric constant of 5 or above include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, magnesium lithium silicate, magnesium sodium silicate, bentonite, hectorite, zirconium titanate, barium titanate, $Pb(Zr,Ti)O_3$ (abbreviated as PZT), $Pb_{1-m}La_mZr_{1-n}Ti_nO_3$ (abbreviated as PLZT, 0<m<1, 0<n<1), $Pb(Mg_3Nb_{2/3})O_3$-$PbTiO_3$ (abbreviated as PMN-PT), and respective modified inorganic particles thereof. Optionally, the inorganic particles may be modified by chemical modification and/or physical modification. The chemical modification methods include coupling agent modification (e.g., using silane coupling agents, titanate coupling agents, etc.), surfactant modification, polymer grafting modification, etc. The physical modification methods may include mechanical dispersion, ultrasonic dispersion, high-energy treatment, and the like. Through modification treatment, the agglomeration of the inorganic particles can be reduced, thereby enabling the inorganic particles to construct and form a more stable and uniform spatial network structure with nanocellulose; in addition, by selecting coupling agents, surface active materials, or polymer modified inorganic particles with specific functional groups, it can also help improve the infiltration characteristics of the coating on the electrolyte solution and enhance the bonding strength between the coating and the substrate.

Optionally, the inorganic particles having ion conductivity but not storing ions include at leas one of $Li_3PO_4$, lithium titanium phosphate $Li_{x1}Ti_{y1}(PO_4)_3$, lithium aluminum titanium phosphate $Li_{x2}Al_{y2}Ti_{z1}(PO_4)_3$, $(LiAlTiP)_{x3}O_{y3}$ type glass, lithium lanthanum titanate $Li_{x4}La_{y4}TiO_3$, lithium germanium thiophosphate $Li_{x5}Ge_{y5}P_{z2}S_w$, lithium nitride $Li_{x6}N_{y6}$, $SiS_2$ type glass $Li_{x7}Si_{y7}S_{z3}$, and $P_2S_5$ type glass $Li_{x8}P_{y8}S_{z4}$, wherein 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, and 0<z4<7. This can further improve the ion transport characteristic of the separator.

The organic particles have the characteristics of good thermal stability and being difficult to decompose, which may improve the heat resistance of the separator; and at the same time, when the internal temperature of the battery cell reaches a melting point of the organic particles due to overcharge abuse, heat abuse, etc., the organic particles may also be melted and sucked into micropores of the substrate due to the capillary action to play a role in closing the pores and breaking the circuit, which is beneficial to ensuring that the battery cell has high safety performance.

In some embodiments, the organic particles include, but not limited to, at least one of polyethylene particles, polypropylene particles, polystyrene particles, melamine resin particles, phenolic resin particles, polyester particles (e.g., polyethylene terephthalate, polyethylene naphthalate, and polybutylene terephthalate), polyimide particles, polyamideimide particles, polyaramid particles, polyphenylene sulfide particles, polysulfone particles, polyethersulfone particles, polyetheretherketone particles, polyaryletherketone particles, and copolymers of butyl acrylate and ethyl methacrylate (e.g., cross-linked polymers of butyl acrylate and ethyl methacrylate).

In some embodiments, the coating further includes a binder. There is no particular limitation on the type of the binder in the present application, and any well-known material with good binding performance may be selected. As an instance, the binder includes at least one of aqueous solution type acrylic resin (e.g., homopolymers of acrylic acid, methacrylic acid, sodium acrylate monomers, or copolymers with other comonomers), polyvinyl alcohol, isobutylene-maleic anhydride copolymers and polyacrylamide.

Optionally, the content of the binder in the coating is <30 %, based on the mass of the coating.

[Electrolyte solution]

During a charging and discharging process of the battery cell, active ions are intercalated and deintercalated back and forth between the positive electrode plate and the negative electrode plate, and the electrolyte solution serves to conduct the active ions between the positive electrode plate and the negative electrode plate. The present application has no specific limitation on a type of the electrolyte solution, which can be selected according to actual requirements.

The electrolyte solution includes an electrolyte salt and a solvent. Types of the electrolyte salt and the solvent are not specifically limited, and may be selected according to actual requirements.

When the battery cell in the present application is a lithium-ion battery, as an instance, the electrolyte salt may include, but is not limited to, at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO_2F_2$), lithium difluoro bis(oxalato)phosphate (LiDFOP), and lithium tetrafluoro(oxalato)phosphate (LiTFOP).

When the battery cell in the present application is a sodium-ion battery, as an instance, the electrolyte salt may include, but is not limited to, at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate ($NaPO_2F_2$), sodium difluoro bis(oxalato) phosphate (NaDFOP), and sodium tetrafluoro(oxalato)phosphate (NaTFOP).

As an instance, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methylsulfonylmethane (MSM), ethyl methyl sulfone (EMS) and ethylsulfonylethane (ESE).

In some embodiments, the electrolyte solution further optionally includes an additive. For example, the additive may include a negative electrode film-forming additive, or may include a positive electrode film-forming additive, and may further include an additive capable of improving certain performances of a battery, such as an additive for improving an overcharging performance of the battery, an additive for improving a high temperature performance of the battery, an additive for improving a low temperature performance of the battery, etc.

In some embodiments, the positive electrode plate, the separator, and the negative electrode plate may be made into an electrode assembly by a winding process and/or a stacking process.

In some embodiments, the battery cell may include an outer package. The outer package can be used to encapsulate the above-mentioned electrode assembly and electrolyte solution.

In some embodiments, the outer package of the battery cell may be a hard housing, such as a hard plastic housing, an aluminum housing, and a steel housing. The outer package of the battery cell may also be a soft bag, such as a pouch-type soft bag. A material of the soft package can be plastic, such as at least one of polypropylene (PP), polybutylene terephthalate (PBT), and polybutylene succinate (PBS).

In some embodiments, the positive electrode plate, the separator, and the negative electrode plate may be made into an electrode assembly by a winding process or a stacking process.

The shape of the battery cell is not particularly limited in the present application, and may be a cylinder shape, a square shape, or any other shape. For example, FIG. 1 shows a battery cell 5 in a square structure as an example.

In some examples, as shown in FIG. 1 and FIG. 2, the outer package may include a housing 51 and a cover plate 53. The housing 51 may include a bottom plate and a side plate connected to the bottom plate, which enclose to form an accommodating cavity. The housing 51 has an opening in communication with the accommodating cavity, and the cover plate 53 is configured to cover the opening to close the accommodating cavity. The positive electrode plate, the negative electrode plate, and the separator may be formed into an electrode assembly 52 by a winding process or a stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. In some examples, the positive electrode plate, the separator, the negative electrode plate, and the electrolyte solution may be assembled to form the battery cell. As an instance, the positive electrode plate, the separator, and the negative electrode plate may form the electrode assembly by a winding process or a stacking process; the electrode assembly is placed in the outer package; the electrolyte solution is poured in after drying; and the battery cell is obtained through processes such as vacuum encapsulation, standing, formation, and shaping.

In some examples of the present application, the battery cell according to the present application may be assembled into a battery module, a number of battery cells included in the battery module can be multiple, and a specific number can be adjusted according to the application and capacity of the battery module.

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a housing having an accommodating space, and the plurality of battery cells 5 are accommodated in the accommodating space.

In some examples, the aforementioned battery modules may further be assembled into a battery pack, and the

number of battery modules included in the battery pack can be adjusted according to the application and capacity of the battery pack.

Both the battery module 4 and the battery pack can be used as specific instances of batteries in the embodiments of the present application.

FIG. 4 and FIG. 5 are schematic views of a battery pack 1 as an instance. As shown in FIG. 4 and FIG. 5, the battery pack 1 may include a battery box and a plurality of battery modules 4 arranged in the battery box. The battery box includes an upper box body 2 and a lower box body 3, wherein the upper box body 2 is configured to cover the lower box body 3 to form an enclosed space for accommodating the battery modules 4. The plurality of battery modules 4 may be arranged in the battery box in any manner.

## Electrical apparatus

In a second aspect, the present application provides an electrical apparatus, including at least one of the battery cell, the battery module, or the battery pack of the present application. The battery cell, the battery module and the battery pack may be used as a power source of the electrical apparatus, or may be used as an energy storage unit of the electrical apparatus. The electrical apparatus may be, but is not limited to, a mobile device (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc. In some embodiments, the battery cell includes a liquid injection hole, which is used to inject an electrolyte solution; and when the battery cell is applied to the electrical apparatus, the liquid injection hole is located at the bottom of the battery cell in the vertical direction. Since the amount of a free electrolyte solution in the battery cell is very small or even non-existent, when the liquid injection hole is arranged at the bottom of the battery cell in the vertical direction, the use reliability of the battery cell can be improved, thereby improving the use reliability of the electrical apparatus.

The battery cell, battery module or battery pack may be selected for the electrical apparatus according to the use requirements thereof. FIG. 6 is a schematic view of an electrical apparatus as an instance. This electrical apparatus 6 is an all-electric vehicle, a hybrid electric vehicle, or a plug-in hybrid electric vehicle, etc. In order to meet the requirements of the electrical apparatus for high power and high energy density, a battery pack 1 or a battery module may be used. As another instance, the electrical apparatus may be a mobile phone, a tablet personal computer, a laptop, etc. The electrical apparatus is generally required to be thin and light, and may use a battery cell as a power source.

## Examples

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. All of the used agents or instruments which are not specified with the manufacturer are conventional commercially-available products.

### Example 1 Preparation of lithium-ion battery

(1) Preparation of positive electrode plate:

An aluminum foil with a thickness of 12 μm was used as a positive electrode current collector.

A lyophilic polymer, a positive electrode active material $LiNi_{0.6}Co_{0.2}Mn_{0.2}O_2$ (NCM622), a conductive agent carbon black, and a binder polyvinylidene fluoride (PVDF) were added into N-methyl pyrrolidone (NMP) and mixed to obtain a positive electrode slurry. A mass ratio of the lyophilic polymer, the NCM622, the conductive carbon black, the PVDF to the N-methylpyrrolidone (NMP) in the positive electrode slurry was 0.5:96.8:2.2:0.5. The current collector aluminum foil was coated with the positive electrode slurry, dried at 85°C, then cold-pressed, then subjected to edge cutting, slicing, and striping, and then dried at 85°C under vacuum for 4 h, to obtain a positive electrode plate.

(2) Preparation of negative electrode plate:

A copper foil with a thickness of 8 μm was used as a negative electrode current collector.

A lyophilic polymer, a negative electrode active material artificial graphite, a conductive agent carbon black, a binder styrene butadiene rubber (SBR), and a thickener sodium carboxymethylcellulose (CMC) were added into water at a weight ratio of 2.5:94.9:2:0.5:0.1 and mixed uniformly to obtain a negative electrode slurry. The current collector copper foil was coated with the negative electrode slurry, dried at 85°C, then subjected to cold pressing, edge cutting, slicing, and striping, and then dried at 120°C under vacuum for 12 h, to obtain a negative electrode plate.

(3) Preparation of electrolyte solution:

In an environment with a water content of less than 10 ppm, non-aqueous organic solvents ethylene carbonate (EC) and ethyl methyl carbonate (EMC) were mixed in a volume ratio of 3:7 to obtain a solvent of an electrolyte solution, and then a lithium salt $LiPF_6$ and the mixed solvent were mixed to prepare an electrolyte solution with a lithium salt concentration of 1 mol/L.

(4) Preparation of lithium-ion battery:

A 16 μm polyethylene film (PE) was used as a substrate of the separator, and a surface of the substrate was coated with a polymer coating. The mass contents of conventional polyvinylidene fluoride (PVDF) and a binder styrene butadiene rubber (SBR) in the polymer coating were 85%:15% respectively.

The positive electrode plate, the separator, and the negative electrode plate mentioned above were stacked in order, so that the separator was positioned between the positive electrode plate and the negative electrode plate to play a separating role, and then winding was performed so that an electrode assembly was obtained; and the electrode assembly was placed into an outer package housing, after drying, the electrolyte solution was injected thereto, and a lithium-ion battery was obtained through processes such as vacuum encapsulation, standing, formation, and shaping.

Comparative Example 1

A lithium-ion battery was prepared by a method similar to that of Example 1. The difference from Example 1 was that, in Comparative Example 1, no lyophilic polymer was added to a positive electrode slurry, and no lyophilic polymer was added to a negative electrode slurry.

Example 2-1 to Example 2-4

A lithium-on battery was prepared by a method similar to that of Example 1. The difference from Example 1 was that, in Example 2-1 to Example 2-4, an adding amount of a lyophilic polymer in a negative electrode slurry was adjusted.

Example 3-1 to Example 3-4

A lithium-on battery was prepared by a method similar to that of Example 1. The difference from Example 1 was that, in Example 3-1 to Example 3-4, an amount of an injected electrolyte solution was adjusted.

Example 4-1 to Example 4-4

A lithium-on battery was prepared by a method similar to that of Example 1. The difference from Example 1 was that, in Example 4-1 to Example 4-4, a type of a lyophilic polymer was adjusted.

Example 5-1 to Example 5-3

A lithium-ion battery was prepared by a method similar to that of Example 1. The difference from Example 1 was that a disposing position of a lyophilic polymer was adjusted in Example 5-1 to Example 5-3, wherein, in Example 5-3, the mass content of polycarbosilane (PCS) was 80%, the mass content of the lyophilic polymer was 10%, and the mass content of a binder was 10%.

**Data of the examples and the comparative examples are as shown in Table 1.**

**<u>Testing part</u>**

1. Lithium-ion battery cycle performance test

The above lithium-ion batteries prepared in the examples and comparative examples were charged and discharged both at a rate of 1C at 25±2°C for full charge and full discharge cycle tests until the capacity of a secondary battery decayed to 80% of an initial capacity, then the tests were stopped and the number of cycles was recorded.

2. Vibration test of lithium-ion battery modules

The above lithium-ion batteries prepared in the examples and comparative examples were charged to a 100% SOC at 0.5C (i.e., a current of 0.5 times the capacity rate) at 25±2°C and left to stand for 1 h. A small hole with a diameter of 2 mm was drilled at the bottom of a battery cell to simulate a battery cell leakage scenario. 12 battery cells were connected in series into a group, one end of a module was connected to a negative electrode of the module, and the other end was half-overlapped/overlapped with an end plate. An external voltage of 200V was applied, and observation was performed for 1 h (if there is a fire, a short-circuit machine could be disconnected) to confirm whether there is an insulation failure fire and the time of the fire.

Table 1

| Item | Lyophilic polymer | | | | | | Amount of lyophilic polymer added to positive electrode plate | Amount of lyophilic polymer added to negative electrode plate | Amount of lyophilic polymer added to separator |
|---|---|---|---|---|---|---|---|---|---|
| | Monomer | Crysta llinity $X_c$ % | Melting temperat ure Tm(°C) | Molecu ar weight | Glass transition temperature Tg(°C) | Slope K | | | |
| Comparati ve Example 1 | / | / | / | 800,000 | / | / | 0 | 0 | 0 |
| Example 1 | 80% VDF+15% HFP+5% TFE | 25% | 135 | 600,000 | 35 | / | 0.5% | 2.5% | 0 |
| Example 2-1 | 80% VDF+15% HFP+5% TFE | 25% | 135 | 600,000 | 35 | / | 0.5% | 4.0% | 0 |
| Example 2-2 | 80% VDF+15% HFP+5% TFE | 25% | 135 | 600,000 | 35 | / | 0.5% | 1.5% | 0 |
| Example 2-3 | 80% VDF+15% HFP+5% TFE | 25% | 135 | 600,000 | 35 | / | 0.5% | 1.2% | 0 |
| Example 2-4 | 80% VDF+15% HFP+5% TFE | 25% | 135 | 600,000 | 35 | / | 0.5% | 0.3% | 0 |
| Example 3-1 | 80% VDF+15% HFP+5% TFE | 25% | 135 | 600,000 | 35 | / | 0.5% | 2.5% | 0 |
| Example 3-2 | 80% VDF+15% HFP+5% TFE | 25% | 135 | 600,000 | 35 | / | 0.5% | 2.5% | 0 |
| Example 3-3 | 80% VDF+15% HFP+5% TFE | 25% | 135 | 600,000 | 35 | / | 0.5% | 2.5% | 0 |
| Example 3-4 | 80% VDF+15% HFP+5% TFE | 25% | 135 | 600,000 | 35 | / | 0.5% | 2.5% | 0 |
| Example 4-1 | 75% VDF+25% HFP | 11% | 112 | 650,000 | -65 | / | 0.5% | 2.5% | 0 |
| Example 4-2 | 80% ethylene oxide + 20% 2-ethyl ethylene oxide | / | / | 250,000 | -45 | 1.2 | 0.5% | 2.5% | 0 |
| Example 4-3 | 60% methyl methacrylate + 35% butyl acrylate + 5% acrylonitrile | / | / | 350,000 | -10 | 1.1 | 0.5% | 2.5% | 0 |
| Example 4-4 | 30% PVA polyvinyl alcohol + 70% formaldehyde | / | / | 200,000 | 28 | 0.8 | 0.5% | 2.5% | 0 |
| Example 5-1 | 80% VDF+15% HFP+5% TFE | 25% | 135 | 600,000 | 35 | / | 0.50% | 0 | 0 |
| Example 5-2 | 80% VDF+15% HFP+5% TFE | 25% | 135 | 600,000 | 35 | / | 0 | 2.50% | 0 |
| Example 5-3 | 80% VDF+15% HFP+5% TFE | 25% | 135 | 600,000 | 35 | / | 0 | 0 | 10% |

In Table 1, VDF stands for vinylidene fluoride, HFP stands for hexafluoropropylene, and TFE stands for tetrafluoroethylene. 80% VDF+15% HFP+5% TFE means that, based on the total mass of all monomers, the mass percentage of the VDF is 80%, the mass percentage of the HFP is 15%, and the mass percentage of the TFE is 5%.
The nominal capacity x of the batteries in the comparative examples and the examples is 151 Ah.

Table 2

| Item | Battery parameter | | | | | | | Battery performance | |
|---|---|---|---|---|---|---|---|---|---|
| | Mass of free electrolyte solution y (g) | Amount of free electrolyte solution per unit capacity b (mg/Ah) | Mass of electrode assembly before drying $m_1$ (g) | Mass of electrode assembly after drying $m_2$ (g) | A=y/(M-M') | $N=y/(m_1-m_2)$ | $Q=y/m_2$ | 25°C 1C/1C cycle @80 % SOH | Module insulation failure time |
| Comparative Example 1 | 120 | 794.7 | 1906.8 | 1604 | 28.38% | 39.63% | 7.48% | 1200 | 1s |
| Example 1 | 2 | 13.2 | 2016.8 | 1604 | 0.47% | 0.48% | 0.12% | 1500 | 15s |
| Example 2-1 | 0.5 | 3.3 | 2026.3 | 1604 | 0.12% | 0.12% | 0.03% | 1600 | 30min |
| Example 2-2 | 8 | 53.0 | 2006.8 | 1604 | 1.89% | 1.99% | 0.50% | 1480 | 5s |
| Example 2-3 | 12 | 79.5 | 1996.8 | 1604 | 2.84% | 3.05% | 0.75% | 1440 | 5s |
| Example 2-4 | 42 | 278.1 | 1984.8 | 1604 | 9.93% | 11.03% | 2.62% | 1310 | 2s |
| Example 3-1 | 30 | 198.7 | 2027 | 1604 | 6.62% | 7.09% | 1.87% | 1700 | 5s |
| Example 3-2 | 2 | 13.2 | 1828.5 | 1604 | 0.88% | 0.89% | 0.12% | 1800 | 30s |
| Example 3-3 | 3 | 19.9 | 1872.8 | 1604 | 1.10% | 1.12% | 0.19% | 1200 | 30s |
| Example 3-4 | 7 | 46.4 | 1974.5 | 1604 | 1.85% | 1.89% | 0.44% | 1290 | 12s |
| Example 4-1 | 0.5 | 3.3 | 2014.8 | 1604 | 0.12% | 0.12% | 0.03% | 1440 | 30min |
| Example 4-2 | 10 | 66.2 | 2011.8 | 1604 | 2.37% | 2.45% | 0.62% | 1405 | 10s |
| Example 4-3 | 8 | 53.0 | 2013.8 | 1604 | 1.89% | 1.95% | 0.50% | 1390 | 10s |
| Example 4-4 | 12 | 79.5 | 2011.8 | 1604 | 2.84% | 2.94% | 0.75% | 1435 | 10s |
| Example 5-1 | 40 | 264.9 | 1981.8 | 1604 | 9.46% | 10.59% | 2.49% | 1250 | 5s |
| Example 5-2 | 1 | 6.6 | 2014.8 | 1604 | 0.24% | 0.24% | 0.06% | 1500 | 10min |
| Example 5-3 | 12 | 79.5 | 2010.8 | 1604 | 2.84% | 2.95% | 0.75% | 1450 | 10s |

It can be seen from Tables 1 and 2 that the positive electrode plate and the negative electrode plate in Comparative Example 1 do not have the lyophilic polymer added. During the cycle of the lithium-ion battery, due to the volume change of the lithium-ion battery, the electrolyte solution in the electrode assembly may be squeezed out, causing a liquid shortage problem, thereby increasing the risk of lithium dendrites and deteriorating the use reliability and cycle performance of the lithium-ion battery.
In the examples of the present application, the lyophilic polymer is added to at least one of the positive electrode plate, the negative electrode plate and the separator. The lyophilic polymer can form a condensed electrolyte with the electrolyte solution, thereby improving the liquid retention capability, thereby improving the use reliability and cycle performance of the lithium-ion battery.
While the present application has been described with reference to the preferred examples, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery cell, comprising an electrode assembly and an electrolyte, wherein the electrode assembly comprises a first electrode plate, a second electrode plate, and a separator, polarities of the first electrode plate and the second electrode plate are opposite, the separator is arranged between the first electrode plate and the second electrode plate, and at least one of the first electrode plate, the second electrode plate, and the separator comprises a lyophilic polymer; and the battery cell satisfies the following formula:

$$0 \leq \frac{y}{M-M'} \leq 15\%;$$

y denotes mass of a free electrolyte solution in the battery cell, with a unit of g;
M denotes mass of the battery cell before the battery cell is dried, with a unit of g; and
M' denotes mass of the battery cell after the battery cell is dried, with a unit of g.

2. The battery cell according to claim 1, wherein

$$0.01\% \leq \frac{y}{M-M'} \leq 10\%;$$

and optionally,

$$0.05\% \leq \frac{y}{M-M'} \leq 7\%.$$

3. The battery cell according to claim 1 or 2, wherein the battery cell further satisfies the following formula:

$$0\% \leq \frac{y}{m_1-m_2} \leq 10\%;$$

and/or

$$0 \leq \frac{y}{m_2} \leq 5\%;$$

$m_1$ denotes mass of the electrode assembly before the electrode assembly is dried, with a unit of g; and
$m_2$ denotes mass of the electrode assembly after the electrode assembly is dried, with a unit of g.

4. The battery cell according to any one of claims 1 to 3, wherein

an amount of the free electrolyte solution per unit capacity of the battery cell is b, with a unit of mg/Ah, wherein $0 \leq b \leq 1400$;
optionally, $0.1 \leq b \leq 1000$; and further optionally, $0.3 \leq b \leq 800$.

5. The battery cell according to any one of claims 1 to 4, wherein the first electrode plate comprises a current collector and an active material layer disposed on at least one surface of the current collector, and the active material layer comprises the lyophilic polymer and active material particles;

the lyophilic polymer is distributed on surfaces of the active material particles; and/or
a plurality of active material particles are provided, a pore exists between every two adjacent active material particles, and the lyophilic polymer is distributed in the pores between the active material particles.

6. The battery cell according to any one of claims 1 to 5, wherein the separator comprises a substrate and a coating disposed on at least one surface of the substrate;

the lyophilic polymer is distributed in pores of the substrate; and/or
the lyophilic polymer is distributed in the coating; and/or
the lyophilic polymer is disposed on a surface of the coating facing away from the substrate.

7. The battery cell according to any one of claims 1 to 6, wherein the lyophilic polymer comprises a fluorinated polymer;

crystallinity of the fluorinated polymer measured by differential scanning calorimetry is $Xc_1$, wherein $0<Xc_1\leq30\%$; and
a melting temperature of the fluorinated polymer is $T_{m1}$, with a unit of °C, wherein $0<T_{m1}\leq140$.

8. The battery cell according to claim 7, wherein a glass transition temperature of the fluorinated polymer is $T_{g1}$, with a unit of °C, wherein $-150\leq T_{g1}\leq60$.

9. The battery cell according to claim 7 or 8, wherein the fluorinated polymer comprises at least one of a structural unit represented by Formula (AI) to a structural unit represented by Formula (AIII),

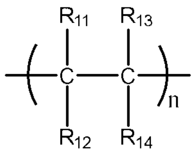 Formula (AI), 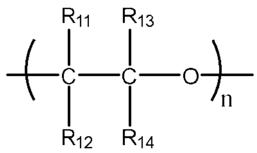 Formula (AII),

in Formula (AI) and Formula (AII), $R_{11}$, $R_{12}$, $R_{13}$ and $R_{14}$ each independently comprise a hydrogen atom, a fluorine atom, a chlorine atom, a substituted or unsubstituted C1-C3 alkyl group or a substituted or unsubstituted C1-C3 alkoxy group, and at least one of $R_{11}$, $R_{12}$, $R_{13}$ and $R_{14}$ comprises a fluorine atom; and when substituted, a substituent comprises one or more of a nitrile group (-CN), a nitro group, a sulfonic group, a sulfonyl group, amide, a carboxyl group, an ester group, and a halogen atom;

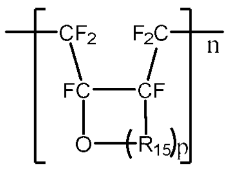 Formula (AIII);

in Formula (AIII), $R_{15}$ comprises a single bond, and a substituted or unsubstituted C1-C3 alkyl group; when substituted, a substituent comprises one or more of a nitrile group (-CN), a nitro group, a sulfonic group, a sulfonyl group, amide, a carboxyl group, an ester group, and a halogen atom; p is a positive integer selected from 1 to 3; and n is a positive integer selected from 1000 to 30000.

10. The battery cell according to any one of claims 1 to 9, wherein the lyophilic polymer further comprises an ether polymer, wherein the ether polymer is made into a sheet-like structural body; the sheet-like structural body is subjected to a dynamic frequency scanning test at $(T_{m2}+20)$°C to obtain an elastic modulus G'-loss modulus G" curve, and a slope of the elastic modulus G'-loss modulus G" curve is $K_1$, wherein $1<K_1<\infty$, and $T_{m2}$°C represents a melting temperature of the ether polymer; optionally, $1<K_1\leq100$; and further optionally, $1<K_1\leq10$.

11. The battery cell according to claim 10, wherein the ether polymer comprises a structural unit represented by Formula (BI) and/or a structural unit represented by Formula (BII),

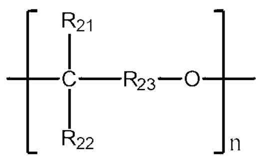 Formula (BI);

in Formula (BI), $R_{21}$ and $R_{22}$ each independently comprise a hydrogen atom, a substituted or unsubstituted C1-C3 alkyl group, or a substituted or unsubstituted C1-C3 alkoxy group; and $R_{23}$ comprises a substituted or unsubstituted C1-C5 alkylene group;

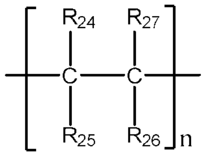
Formula (BII);

in Formula (BII), $R_{24}$ to $R_{27}$ each independently comprise a hydrogen atom, a substituted or unsubstituted C1-C3 alkyl group, a substituted or unsubstituted C1-C3 alkoxy group or an ether group, and at least one of $R_{24}$ to $R_{27}$ comprises a substituted or unsubstituted C1-C3 alkoxy group or an ether group.

**12.** The battery cell according to any one of claims 1 to 11, wherein the lyophilic polymer comprises an ester polymer, wherein the ester polymer is made into a sheet structure; the sheet structure is subjected to a dynamic frequency scanning test at $(T_{m3}+20)$°C to obtain an elastic modulus G'-loss modulus G" curve, and a slope of the elastic modulus G'-loss modulus G" curve is $K_2$, wherein $1<K_2<\infty$, and $T_{m3}$°C represents a melting temperature of the ester polymer; optionally, $1<K_2\leq100$; and further optionally, $1<K_2\leq10$.

**13.** The battery cell according to claim 12, wherein the ester polymer comprises a structural unit represented by Formula (CI) and/or a structural unit represented by Formula (CII),

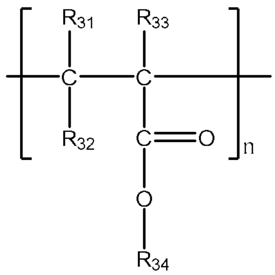
Formula (CI);

in Formula (CI), $R_{31}$, $R_{32}$ and $R_{33}$ each independently comprise a hydrogen atom, or a substituted or unsubstituted C1-C8 alkyl group; and $R_{34}$ comprises a substituted or unsubstituted C1-C8 alkyl group, or a substituted or unsubstituted C1-C8 hydroxyalkyl group;

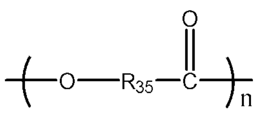
Formula (CII);

in Formula (CII), $R_{35}$ comprises a substituted or unsubstituted C2-C6 methylene group; and optionally, $R_{35}$ each independently comprises a substituted or unsubstituted C2-C4 methylene group.

**14.** The battery cell according to any one of claims 1 to 13, wherein the lyophilic polymer comprises an aldehyde ketone polymer, wherein the aldehyde ketone polymer is made into a sheet-like structural body; the sheet-like structural body is subjected to a dynamic frequency scanning test at $(T_{m4}+20)$°C to obtain an elastic modulus G'-loss modulus G" curve, and a slope of the elastic modulus G'-loss modulus G" curve is $K_3$, wherein $0.8\leq K_3<\infty$, and $T_{m4}$°C represents a melting temperature of the aldehyde ketone polymer; optionally, $0.8\leq K_3\leq100$; and further optionally, $0.8\leq K_3\leq10$.

**15.** The battery cell according to claim 14, wherein the aldehyde ketone polymer comprises a structural unit represented by Formula (DI) and/or a structural unit represented by Formula (DII),

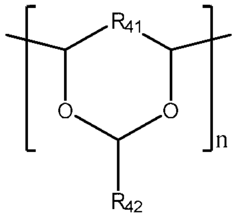

Formula (DI);

in Formula (DI), $R_{41}$ comprises a single bond, and a substituted or unsubstituted C1-C6 methylene group; and $R_{42}$ comprises a hydrogen atom, and a substituted or unsubstituted C1-C6 alkyl group;

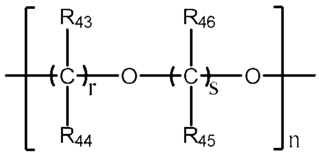

Formula (DII);

in Formula (DII), $R_{43}$ to $R_{46}$ each independently comprise a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; and r and s are each independently selected from integers in a range of 0 to 5, and at least one of r and s is selected from positive integers.

**16.** The battery cell according to any one of claims 1 to 15, wherein a molecular weight of the lyophilic polymer is $1.2\times10^5$ g/mol to $1\times10^6$ g/mol.

**17.** A battery, comprising the battery cell according to any one of claims 1 to 16.

**18.** An electrical apparatus, comprising the battery according to claim 17.

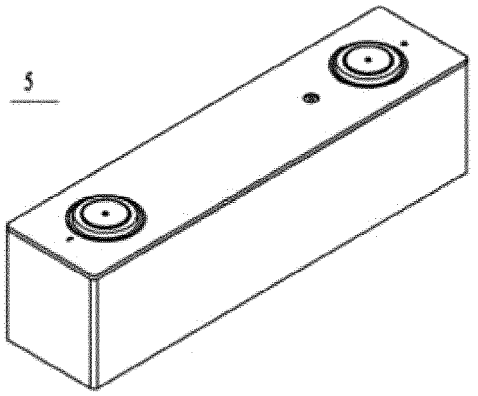


FIG. 1

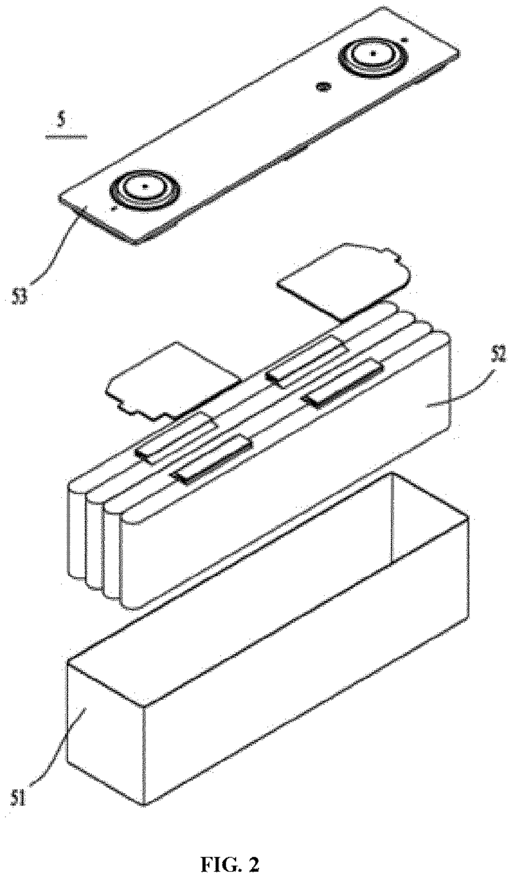


FIG. 2

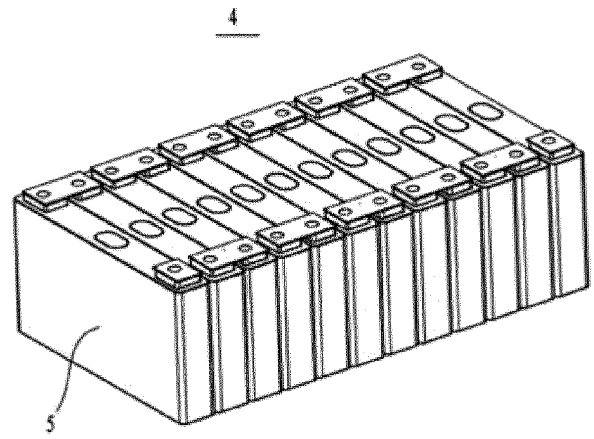


FIG. 3

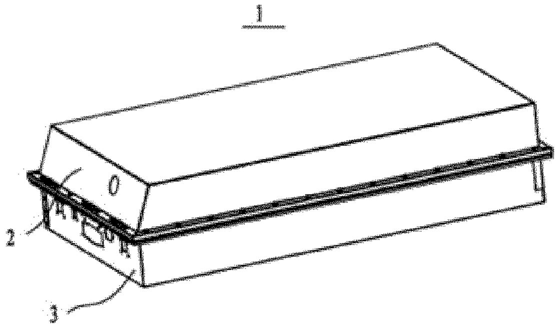


FIG. 4

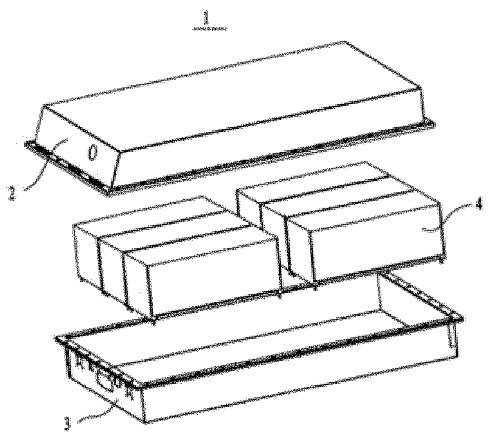


FIG. 5

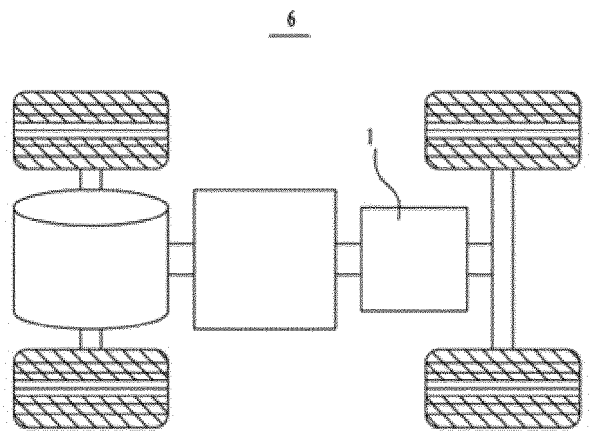


FIG. 6

## INTERNATIONAL SEARCH REPORT

International application No.
**PCT/CN2023/088801**

**A. CLASSIFICATION OF SUBJECT MATTER**

H01M10/04(2006.01)i; H01M4/131(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, WPABS, WPABSC, CNKI, IEEE: 宁德时代新能源科技股份有限公司, 电池, 电极, 电解液, 电解质, 氟, 隔离膜, 结构单元, 结构式, 浸润, 聚合物, 醚, 醚基, 亲水, 亲液, 醛酮, 润湿, 游离电解质, 吸附, 酯, battery, cell, polymer, hydrophilicity, water, adsorpt+, wet, lyophilic, electrode, fluoride, ethers, esters, aldehydes, ketones

**C. DOCUMENTS CONSIDERED TO BE RELEVANT**

| Category* | Citation of document, with indication, where appropriate, of the relevant passages | Relevant to claim No. |
|---|---|---|
| X | CN 115340624 A (NINGDE CONTEMPORARY AMPEREX TECHNOLOGY CO., LTD.) 15 November 2022 (2022-11-15) description, paragraphs [0004]-[0180], and figures 1-6 | 1-9, 12-13, 16-18 |
| X | CN 112803081 A (JIANGSU CONTEMPORARY AMPEREX TECHNOLOGY LTD.) 14 May 2021 (2021-05-14) description, paragraphs [0066]-[0091], and figures 1-16 | 1-9, 12-13, 16-18 |
| X | US 2017263945 A1 (IOWA STATE UNIVERSITY RESEARCH FOUNDATION, INC.) 14 September 2017 (2017-09-14) description, paragraphs [0084]-[0333], and figures 1-68 | 1-9, 12-13, 16-18 |
| Y | CN 115340624 A (NINGDE CONTEMPORARY AMPEREX TECHNOLOGY CO., LTD.) 15 November 2022 (2022-11-15) description, paragraphs [0004]-[0180], and figures 1-6 | 10-11, 14-15 |
| Y | CN 104981923 A (NIPPON SHOKUBAI CO., LTD.) 14 October 2015 (2015-10-14) description, paragraphs [0035]-[0113] | 10-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 June 2023** | **23 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2023/088801

C. DOCUMENTS CONSIDERED TO BE RELEVANT

| Category* | Citation of document, with indication, where appropriate, of the relevant passages | Relevant to claim No. |
|---|---|---|
| Y | CN 115057980 A (CHANGCHUN INSTITUTE OF APPLIED CHEMISTRY, CHINESE ACADEMY OF SCIENCES) 16 September 2022 (2022-09-16) description, paragraphs [0002]-[0047] | 14-15 |
| A | US 2018076444 A1 (ARKEMA FRANCE) 15 March 2018 (2018-03-15) entire document | 1-18 |
| A | JP 2012219125 A (KUREHA CORPORATION) 12 November 2012 (2012-11-12) entire document | 1-18 |
| A | KR 20150084168 A (LG CHEMICAL LTD.) 22 July 2015 (2015-07-22) entire document | 1-18 |

Form PCT/ISA/210 (second sheet) (July 2022)

**INTERNATIONAL SEARCH REPORT**
**Information on patent family members**

International application No.
**PCT/CN2023/088801**

| Patent document cited in search report | Publication date (day/month/year) | Patent family member(s) | Publication date (day/month/year) |
|---|---|---|---|
| CN 115340624 A | 15 November 2022 | None | |
| CN 112803081 A | 14 May 2021 | CN 112803081 B | 06 August 2021 |
| US 2017263945 A1 | 14 September 2017 | US 10446852 B2 | 15 October 2019 |
| CN 104981923 A | 14 October 2015 | WO 2014119663 A1 | 07 August 2014 |
| | | US 2015364789 A1 | 17 December 2015 |
| | | US 10573927 B2 | 25 February 2020 |
| | | EP 2953190 A1 | 09 December 2015 |
| | | EP 2953190 A4 | 05 October 2016 |
| | | EP 2953190 B1 | 22 May 2019 |
| | | KR 20150113124 A | 07 October 2015 |
| | | KR 102256769 B1 | 26 May 2021 |
| | | JP 2014167910 A | 11 September 2014 |
| | | JP 2015005493 A | 08 January 2015 |
| | | JP 6368097 B2 | 01 August 2018 |
| | | JP 6532186 B2 | 19 June 2019 |
| | | CN 104981923 B | 11 September 2018 |
| CN 115057980 A | 16 September 2022 | None | |
| US 2018076444 A1 | 15 March 2018 | CA 2978022 A1 | 09 September 2016 |
| | | CA 2978022 C | 25 October 2022 |
| | | PL 3266058 T3 | 15 June 2020 |
| | | US 10615405 B2 | 07 April 2020 |
| | | WO 2016139426 A1 | 09 September 2016 |
| | | JP 2018511143 A | 19 April 2018 |
| | | JP 6695349 B2 | 20 May 2020 |
| | | FR 3033448 A1 | 09 September 2016 |
| | | FR 3033448 B1 | 10 September 2021 |
| | | EP 3266058 A1 | 10 January 2018 |
| | | EP 3266058 B1 | 26 February 2020 |
| | | HUE 048890 T2 | 28 August 2020 |
| | | KR 20170121284 A | 01 November 2017 |
| | | AU 2016227523 A1 | 21 September 2017 |
| | | AU 2016227523 B2 | 02 July 2020 |
| JP 2012219125 A | 12 November 2012 | JP 5701131 B2 | 15 April 2015 |
| | | KR 20120113659 A | 15 October 2012 |
| | | KR 101352229 B1 | 15 January 2014 |
| | | CN 102731707 A | 17 October 2012 |
| | | CN 102731707 B | 23 September 2015 |
| KR 20150084168 A | 22 July 2015 | KR 101671393 B1 | 01 November 2016 |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- GB 60402002 T